# EUROPEAN PATENT APPLICATION

(11) **EP 4 636 592 A1**
(43) Date of publication of application: **22.10.2025**
(21) Application number: 24806582.3
(22) Date of filing: 14.05.2024
(51) Int. Cl.: G06F 9/54, G06F 3/0486, G06F 16/176, H04L 67/06

(54) **DATA SHARING METHOD AND SYSTEM, AND ELECTRONIC DEVICE**

(30) Priority: 16.05.2023 CN 202310555908
(71) Applicant: Huawei Technologies Co., Ltd., Shenzhen, Guangdong 518129 (CN)
(72) Inventor: LI, Youfu, Shenzhen, Guangdong 518129 (CN); DU, Lei, Shenzhen, Guangdong 518129 (CN); LIU, Wenhui, Shenzhen, Guangdong 518129 (CN); DAI, Zhicheng, Shenzhen, Guangdong 518129 (CN)
(74) Representative: Thun, Clemens
(86) International application number: PCT/CN2024/093173
(87) International publication number: WO 2024/235232

(57) **Abstract**

This application provides a data sharing method and system, and an electronic device. Regardless of data sharing between two applications on a same device or data sharing between two applications on different devices, a sender application may obtain a specified data definition standard from a unified data management framework, and share data based on the specified data definition standard to generate redefined shared data; and a receiver application may also obtain the same specified data definition standard from the unified data management framework, and parse the redefined shared data to obtain the shared data. For different applications and different sharing paths, data definition standards are unified. This implements definition unification of shared data and simplifies a data processing procedure.

## Description

This application claims priority to Chinese Patent Application No. 202310555908.8, filed with the China National Intellectual Property Administration on May 16, 2023 and entitled "DATA SHARING METHOD AND SYSTEM, AND ELECTRONIC DEVICE", which is incorporated herein by reference in its entirety.

### TECHNICAL FIELD

This application relates to the field of data processing technologies, and in particular, to a data sharing method and system, and an electronic device.

### BACKGROUND

With consumption upgrade, a user has more intelligent terminal devices. In some scenarios, the user may share data between different terminal devices. For example, the terminal devices may share the data through a sharing path like "drag" or "clipboard". In another scenario, the user may alternatively share the data between different applications on a same terminal device. The different applications on the same terminal device may also share the data through the sharing path like "drag" or "clipboard".

Different sharing paths for the foregoing different applications and data have different standard definitions for shared data. For the different sharing paths, a sender needs to define the shared data through the different sharing paths, and a receiver also needs to perform parsing based on the plurality of different standard definitions to obtain the data sent by the sender. This leads to a complex data receiving and sending process. How to improve convenience of data transmission between devices and between applications needs further research.

### SUMMARY

This application provides a data sharing method and system, and an electronic device, to simplify a processing procedure of data transmission between two applications based on a unified data definition standard.

According to a first aspect, this application provides a data sharing system. The system includes a first electronic device and a second electronic device, the first electronic device establishes a communication connection to the second electronic device, the first electronic device includes a first application, and the second electronic device includes a second application. The first application is configured to obtain first data. The first application is further configured to: generate, based on a specified data definition standard, first definition data corresponding to the first data, where the first definition data includes an attribute of the first data and the first data, or the first definition data includes an attribute of the first data and a storage path of the first data; and send the first definition data to the second application through a first sharing path and the communication connection. The second application is configured to obtain the first definition data through the first sharing path. The second application is further configured to parse out the first data or the storage path of the first data from the first definition data based on the specified data definition standard. The first application is further configured to: obtain second data; generate, based on the specified data definition standard, second definition data corresponding to the second data, where the second definition data includes an attribute of the second data and the second data, or the second definition data includes an attribute of the second data and a storage path of the second data; and send the second definition data to the second application through the second sharing path and the communication connection. The second application is further configured to: obtain the second definition data through the second sharing path; and parse out the second data or the storage path of the second data from the second definition data based on the specified data definition standard. The second sharing path is different from the first sharing path.

The first sharing path or the second sharing path includes any one of the following: a drag path, a clipboard path, a cross-device manual path, and a cross-device automatic path.

Optionally, the first application and the second application may be the same, or the first application and the second application may be different. This is not limited in this application.

For example, the first data may be an image. When the image is separately sent to an instant messaging application through the first sharing path and the second sharing path, a type of the image is defined as "image" for the two paths.

Based on data sharing between two applications on different devices provided by the system, different applications need to define shared data based on this standard before data sharing is performed. After the shared data is received, the different applications also need to perform parsing based on this standard to obtain the shared data. In other words, for different applications and different sharing paths, data definition standards are unified. This implements format unification of the shared data.

With reference to the first aspect, in a possible implementation, the first electronic device further includes a first data management framework, and the second electronic device further includes a second data management framework; the first application is specifically configured to send the first definition data to the first data management framework through the first sharing path; the first data management framework is configured to send the first definition data to the second data management framework through the communication connection; and the second data management framework is further configured to send the first definition data to the second application through the first sharing path.

This application provides a data management framework (the first data management framework and the second data management framework), configured to perform statistics management on data on a device. The second data management framework may store the first definition data, and the second application may read data from the second data management framework.

With reference to the first aspect, in a possible implementation, the first application is further configured to: generate a unified management protocol for the first data based on a unified management protocol standard, where the unified management protocol for the first data includes an identifier of the first sharing path; and send the unified management protocol for the first data to the first data management framework, where the first data management framework is further configured to send the unified management protocol for the first data to the second data management framework through the communication connection; and the second data management framework is specifically configured to: obtain the identifier of the first sharing path from the unified management protocol for the first data; and send the first definition data to the second application based on the identifier of the first sharing path through the first sharing path.

In this way, after determining an identifier of a sharing path based on the unified management protocol for the first data, the unified data management framework may share the identifier to a peer application through the corresponding path.

With reference to the first aspect, in a possible implementation, the first application is further configured to: generate a use description of the first data based on the specified data definition standard, where the use description of the first data includes personalized permission of the first sharing path; and send the use description of the first data to the first data management framework, where the first data management framework is further configured to send the use description of the first data to the second data management framework through the communication connection; and the second data management framework is specifically configured to: obtain a first notification sent by the second application, where the first notification is used to read the first data, and the first notification includes an identifier of the second application; obtain a permission rule of the first sharing path based on the identifier of the first sharing path in the unified management protocol for the first data; obtain the personalized permission of the first data from the use description of the first data; and after it is determined, based on the use description of the first data, that the second application is capable of accessing the first data, and when the first data management framework determines, based on the personalized permission of the first data, the permission rule of the first sharing path, a permission rule of the second data management framework, and the identifier of the second application, that the second application has permission to access the first data, send the first definition data to the second application based on the identifier of the first sharing path through the first sharing path.

In this way, the unified data management framework may verify, based on the specified data definition standard, whether the second application is capable of using the data. After it is verified that the second application is capable of using the data, the unified data management framework determines, based on one or more of the personalized permission of the first data, the permission rule of the first sharing path, and the permission rule of the second data management framework, whether the second application has permission to use the data. After it is determined that the second application has permission to use the data, the data is sent to the second application.

Specifically, the use description of the first data includes an application source field, an operating system source field, and a type field of the first data.

When the type field indicates that the first data is basic data, the unified data management framework may directly determine whether the second application has permission to use the data. It does not need to view the application source field and the operating system source field.

When the type field indicates that the first data is system-defined data, the unified data management framework needs to first view the operating system source field to determine whether an operating system of a device on which the second application is installed is the same as an operating system source. If the operating system of the device on which the second application is installed is the same as the operating system source, it indicates that the second application is capable of accessing the data, and then the unified data management framework determines whether the second application has permission to use the data.

When the type field indicates that the first data is application-defined data, the unified data management framework needs to first view the operation application source field to determine whether the installed second application is the same as an application source. If the installed second application is the same as an application source, it indicates that the second application is capable of accessing the data, and then the unified data management framework determines whether the second application has permission to use the data.

According to a second aspect, this application provides a data sharing method. The method includes: A second application on a second electronic device obtains, through a first sharing path and a communication connection, first definition data sent by a first application on a first electronic device, where the first definition data is generated by the first application based on a specified data definition standard and first data; the first definition data includes an attribute of the first data and the first data, or the first definition data includes an attribute of the first data and a storage path of the first data; the second electronic device is different from the first electronic device; and the first electronic device establishes the communication connection to the second electronic device; the second application parses out the first data or the storage path of the first data from the first definition data based on the specified data definition standard; the second application obtains, through a second sharing path and the communication connection, second definition data sent by the first application, where the second definition data is generated by the first application based on the specified data definition standard and second data; and the second definition data includes an attribute of the second data and the second data, or the second definition data includes an attribute of the second data and a storage path of the second data; and the second application parses out the second data or the storage path of the second data from the second definition data based on the specified data definition standard, where the second sharing path is different from the first sharing path.

Optionally, when the first data is non-file data, the first definition data includes the attribute of the first data and the first data. The non-file data may include but is not limited to text data, system-defined data, and application-defined data.

When the first data is file data, the first definition data includes the attribute of the first data and the storage path of the first data.

With reference to the second aspect, in a possible implementation, the second application obtains, through the second sharing path and the communication connection, the first definition data sent by the first application; and the second application parses out the first data or the storage path of the first data from the first definition data based on the specified data definition standard.

In this way, the same shared data is shared to a peer application through different sharing paths. The first application may directly reuse previous first definition data, and does not need to generate the first definition data based on the specified data definition standard and the first data.

With reference to the second aspect, in a possible implementation, the first electronic device further includes a first data management framework, and the second electronic device further includes a second data management framework; and that a second application obtains, through a first sharing path and a communication connection, first definition data sent by a first application specifically includes: The second data management framework receives, through the communication connection, the first definition data sent by the first data management framework, where the first definition data stored in the first data management framework is sent by the first application; and the second data management framework sends the first definition data to the second application through the first sharing path.

With reference to the second aspect, in a possible implementation, that a second application obtains, through a first sharing path, first definition data sent by a first application specifically includes: The second data management framework receives, through the communication connection, a unified management protocol for the first data that is sent by the first data management framework, where the unified management protocol for the first data is generated by the first application based on a unified management protocol standard, and the unified management protocol for the first data includes an identifier of the first sharing path; the second data management framework obtains the identifier of the first sharing path from the unified management protocol for the first data; and the second data management framework sends the first definition data to the second application based on the identifier of the first sharing path through the first sharing path.

In this way, after determining an identifier of a sharing path based on the unified management protocol for the first data, a unified data management framework may share the identifier to a peer application through the corresponding path.

With reference to the second aspect, in a possible implementation, that the second application obtains, through the second sharing path, the second definition data sent by the first application specifically includes: The second data management framework receives, through the communication connection, a unified management protocol for the second data that is sent by the first data management framework, where the unified management protocol for the second data is generated by the first application based on the unified management protocol standard, and the unified management protocol for the second data includes an identifier of the second sharing path; the second data management framework obtains the identifier of the second sharing path from the unified management protocol for the second data; and the second data management framework sends the second definition data to the second application based on the identifier of the second sharing path through the second sharing path, where the unified management protocol for the second data is different from the unified management protocol for the first data.

In this way, for different sharing paths, unified management protocols for shared data that are generated by the first application are different.

With reference to the second aspect, in a possible implementation, before that the second data management framework sends the first definition data to the second application based on the identifier of the first sharing path through the first sharing path, the method further includes: The second data management framework receives, through the communication connection, a use description of the first data that is sent by the first data management framework, where the use description of the first data is generated by the first application based on the specified data definition standard and sent to the first data management framework, and the use description of the first data includes personalized permission of the first data. That the second data management framework sends the first definition data to the second application based on the identifier of the first sharing path through the first sharing path specifically includes: The second data management framework obtains a first notification sent by the second application, where the first notification is used to read the first data, and the first notification includes an identifier of the second application; the second data management framework obtains a permission rule of the first sharing path based on the identifier of the first sharing path in the unified management protocol for the first data; the second data management framework obtains the personalized permission of the first data from the use description of the first data; and after the second data management framework determines, based on the use description of the first data, that the second application is capable of accessing the first data, and when the first data management framework determines, based on the personalized permission of the first data, the permission rule of the first sharing path, a permission rule of the first data management framework, and the identifier of the second application, that the second application has permission to access the first data, the second data management framework sends the first definition data to the second application based on the identifier of the first sharing path through the first sharing path.

With reference to the second aspect, in a possible implementation, after the second data management framework receives the first definition data and the unified management protocol for the first data, the method further includes: The second data management framework verifies the first definition data based on the specified data definition standard; and when the verification succeeds, the second data management framework stores the first definition data, the unified management protocol for the first data, and the use description of the first data.

With reference to the second aspect, in a possible implementation, when the verification fails, the first definition data, the unified management protocol for the first data, and the use description of the first data are deleted.

In this way, it is ensured that redefinition data stored in the second data management framework is defined based on the specified data definition standard.

With reference to the second aspect, in a possible implementation, the specified data definition standard is stored in the second data management framework. The method further includes: The second data management framework sends the specified data definition standard to the second application.

In this way, the second application may parse the first definition data based on the specified data definition standard to obtain the first data.

With reference to the second aspect, in a possible implementation, after the second application parses out the storage path of the first data from the first definition data based on the specified data definition standard, the method further includes: The second application sends the storage path of the first data to the first application through the communication connection; and the second application receives, through the communication connection, the first data sent by the first application, where the first data is obtained by the first application based on the storage path of the first data.

With reference to the second aspect, in a possible implementation, after that the second application parses out the first data or the storage path of the first data from the first definition data, the method further includes: The first data management framework deletes the first definition data.

In this way, the second data management framework can clear used shared data in time, to avoid a data leakage case.

According to a third aspect, this application provides a data sharing method, applied to a first electronic device, where the first electronic device includes a first application and a second application. The method includes: The first application obtains first data; the first application generates, based on a specified data definition standard, first definition data corresponding to the first data, where the first definition data includes an attribute of the first data and the first data, or the first definition data includes an attribute of the first data and a storage path of the first data; the first application sends the first definition data to the second application through a first sharing path; the second application parses out the first data or the storage path of the first data from the first definition data based on the specified data definition standard; the first application obtains second data; the first application generates, based on the specified data definition standard, second definition data corresponding to the second data, where the second definition data includes an attribute of the second data and the second data, or the second definition data includes an attribute of the second data and a storage path of the second data; the first application sends the second definition data to the second application through a second sharing path; and the second application parses out the second data or the storage path of the second data from the second definition data based on the specified data definition standard, where the second sharing path is different from the first sharing path.

Based on the method for sharing data between two applications on a same device, different applications need to define shared data based on this standard before data sharing is performed. After the shared data is received, the different applications also need to perform parsing based on this standard to obtain the shared data. In other words, for different applications and different sharing paths, data definition standards are unified. This implements format unification of the shared data.

With reference to the third aspect, in a possible implementation, the method further includes: The first application obtains the first definition data; the first application sends the first definition data to the second application through the second sharing path; and the second application parses out the first data or the storage path of the first data from the first definition data based on the specified data definition standard.

In this way, the same shared data is shared to a peer application through different sharing paths. The first application may directly reuse previous first definition data, and does not need to generate the first definition data based on the specified data definition standard and the first data.

With reference to the third aspect, in a possible implementation, the first electronic device further includes a first data management framework, and that the first application sends the first definition data to the second application through a first sharing path specifically includes: The first application generates a unified management protocol for the first data based on a unified management protocol standard, where the unified management protocol for the first data includes an identifier of the first sharing path; the first application sends the first definition data and the unified management protocol for the first data to the first data management framework; the first data management framework obtains the identifier of the first sharing path from the unified management protocol for the first data; and the first data management framework sends, based on the identifier of the first sharing path, the first definition data to the second application through the first sharing path.

With reference to the third aspect, in a possible implementation, that the second application sends the second definition data to the second application through the second sharing path specifically includes: The first application generates a unified management protocol for the second data based on the unified management protocol standard, where the unified management protocol for the second data includes an identifier of the second sharing path; the first application sends the second definition data and the unified management protocol for the second data to the first data management framework; the first data management framework obtains the identifier of the second sharing path from the unified management protocol for the second data; and the first data management framework sends the second definition data to the second application based on the identifier of the second sharing path through the first sharing path, where the unified management protocol for the second data is different from the unified management protocol for the first data.

With reference to the third aspect, in a possible implementation, the method further includes: The first application generates a use description of the first data based on the specified data definition standard, where the use description of the first data includes personalized permission of the first data. That the first data management framework sends, based on the identifier of the first sharing path, the first definition data to the second application through the first sharing path specifically includes: The first data management framework obtains a first notification sent by the second application, where the first notification is used to read the first data, and the first notification includes an identifier of the second application; the first data management framework obtains a permission rule of the first sharing path based on the identifier of the first sharing path in the unified management protocol for the first data; the first data management framework obtains the personalized permission of the first data from the use description of the first data; and after the first data management framework determines, based on the use description of the first data, that the second application is capable of accessing the first data, and when the first data management framework determines, based on the personalized permission of the first data, the permission rule of the first sharing path, a permission rule of the first data management framework, and the identifier of the second application, that the second application has permission to access the first data, the first data management framework sends the first definition data to the second application based on the identifier of the first sharing path through the first sharing path.

With reference to the third aspect, in a possible implementation, after that the first application sends the first definition data and the unified management protocol for the first data to the first data management framework, the method further includes: The first data management framework verifies the first definition data based on the specified data definition standard; and when the verification succeeds, the first data management framework stores the first definition data, the unified management protocol for the first data, and the use description of the first data.

With reference to the third aspect, in a possible implementation, the method further includes: When the verification fails, the first definition data, the unified management protocol for the first data, and the use description of the first data are deleted.

With reference to the third aspect, in a possible implementation, after that the second application parses out the first data or the storage path of the first data from the first definition data, the method further includes: The first data management framework deletes the first definition data.

With reference to the third aspect, in a possible implementation, the first sharing path or the second sharing path includes any one of the following: a drag path, a clipboard path, a cross-application manual path, and a cross-application automatic path.

With reference to the third aspect, in a possible implementation, the attribute of the first data includes one or more of the following: a type of the first data, a size of the first data, and creation time of the first data.

According to a fourth aspect, this application provides an electronic device. The electronic device includes one or more processors, one or more memories, and one or more cameras. The one or more cameras and the one or more memories are coupled to the one or more processors. The one or more memories are configured to store computer program code, and the computer program code includes computer instructions. The one or more processors invoke the computer instructions, so that the electronic device performs the data sharing method according to any one of the possible implementations of the third aspect.

According to a fifth aspect, this application provides a computer-readable storage medium, configured to store computer instructions. When the computer instructions are run on an electronic device, the electronic device is enabled to perform the data sharing method according to any one of the possible implementations of the third aspect.

According to a sixth aspect, this application provides a computer program product. When the computer program product is run on an electronic device, the electronic device is enabled to perform the data sharing method according to any one of the possible implementations of the third aspect.

According to a seventh aspect, this application provides an electronic device. The electronic device includes one or more processors, one or more memories, and one or more cameras. The one or more cameras and the one or more memories are coupled to the one or more processors. The one or more memories are configured to store computer program code, and the computer program code includes computer instructions. The one or more processors invoke the computer instructions, so that the electronic device performs the data sharing method according to any one of the possible implementations of the second aspect.

According to an eighth aspect, this application provides a computer-readable storage medium, configured to store computer instructions. When the computer instructions are run on an electronic device, the electronic device is enabled to perform the data sharing method according to any one of the possible implementations of the second aspect.

According to a ninth aspect, this application provides a computer program product. When the computer program product is run on an electronic device, the electronic device is enabled to perform the data sharing method according to any one of the possible implementations of the second aspect.

For descriptions of beneficial effect of the third aspect to the ninth aspect, refer to the descriptions of the beneficial effect of the first aspect and the second aspect. Details are not described herein again in this application.

### BRIEF DESCRIPTION OF DRAWINGS

FIG. 1A to FIG. 1J are diagrams of UIs for data sharing between two applications;
FIG. 2A to FIG. 2G are diagrams of UIs for data sharing between two applications on different devices;
FIG. 3 shows a specific implementation of data sharing between two applications on a same device through different sharing paths;
FIG. 4 shows a specific implementation of data sharing between two applications on different devices through different sharing paths;
FIG. 5 is a diagram of an architecture of a system 50 according to an embodiment of this application;
FIG. 6A is a diagram of a structure of an electronic device 100 according to an embodiment of this application;
FIG. 6B is a block diagram of a software structure of an electronic device 100 according to an embodiment of this application;
FIG. 7 is a diagram of a specific implementation of how a unified data management framework stores first data shared by an application A on an electronic device 100;
FIG. 8 is a diagram of a specific implementation of how an application B on an electronic device 100 reads, from a unified data management framework, first data shared by an application A;
FIG. 9A and FIG. 9B are a diagram of a specific implementation of how a unified data management framework on an electronic device 200 stores first data shared by an application A on an electronic device 100;
FIG. 10 is a diagram of a specific implementation of how an application B on an electronic device 200 reads, from a unified data management framework on the electronic device 200, first data shared by an application A on an electronic device 100;
FIG. 11A to FIG. 11C are a diagram of a method of how an application A on an electronic device 100 shares data to an application B on the electronic device 100 according to an embodiment of this application; and
FIG. 12A to FIG. 12D are a diagram of a method of how an application A on an electronic device 100 shares data to an application B on an electronic device 200 according to an embodiment of this application.

### DESCRIPTION OF EMBODIMENTS

The following clearly describes the technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "multiple" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of an electronic device.

First, two application scenarios in this application are described: a scenario of data sharing between two applications on a same device and a scenario of data sharing between two applications on different devices.

**A data sharing path between the two applications on the same device may include but is not limited to: a drag path, a clipboard path, a cross-application path, and the like. The two applications on the same device may be the same or different.**

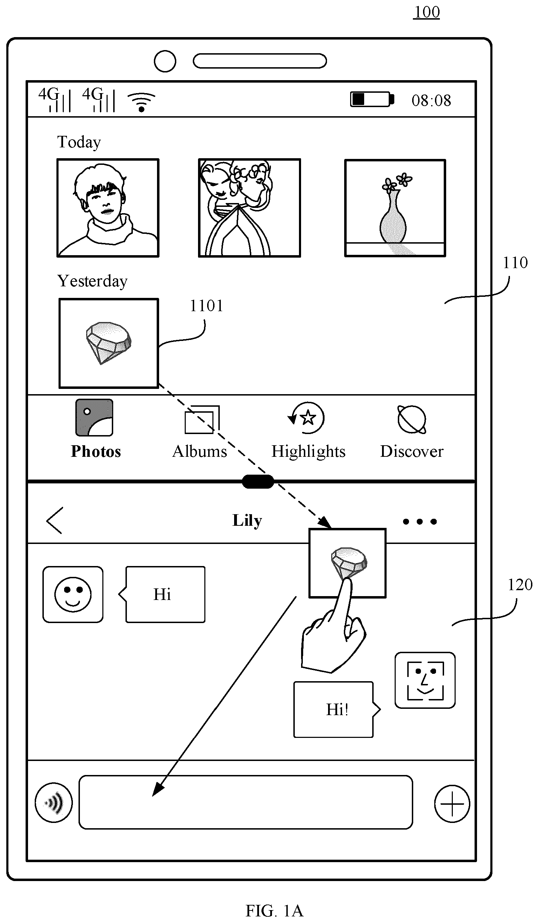

**FIG. 1A to FIG. 1J** **are diagrams of UIs for data sharing between the two applications.**

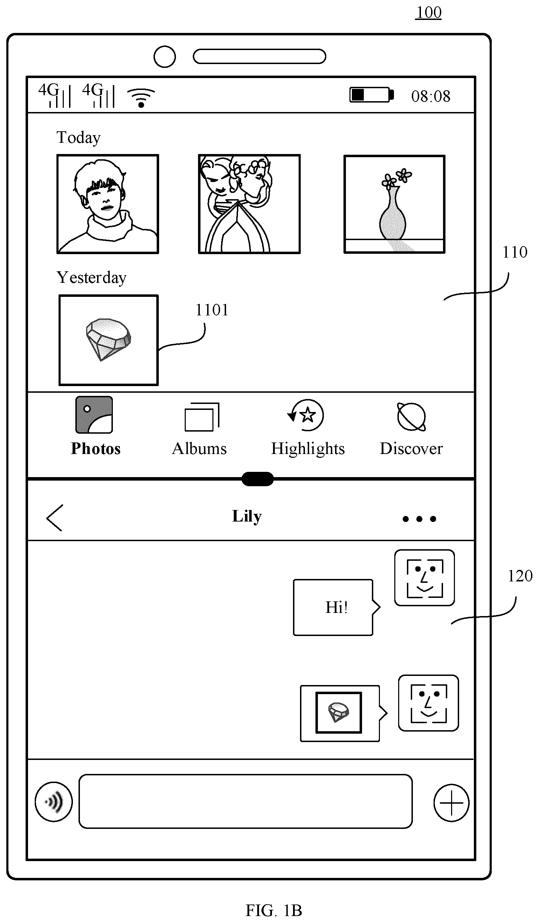

**FIG. 1A** **and** **FIG. 1B** **are diagrams of UIs for sharing data in an application A to an application B through the drag path.**

The drag path on the same device may mean: selecting data in the application A (for example, selecting the data through touching and holding) and then directly sharing the data to the application B through the drag path.

For example, the application A may be a gallery application, and the application B may be an instant messaging application.

As shown in FIG. 1A, an application interface 110 of the gallery application and an application interface 120 of the instant messaging application are displayed in split screen on an electronic device 100. A plurality of pictures are displayed in the application interface 110, and a dialog box of a contact "Lily" is displayed in the application interface 120.

As shown in FIG. 1A, the electronic device 100 may receive a touch and hold operation and a drag operation performed by a user on a picture 1101 in the plurality of pictures, and directly share the picture 1101 to the contact "Lily" through the drag path.

As shown in FIG. 1B, after the user shares the picture 1101 to the contact "Lily" through the drag path, the electronic device 100 may display the shared picture 1101 in the application interface 120.

This application is not limited to split-screen dragging, and is described only by using split-screen dragging as an example. The drag path may be further applied to another scenario. This is not limited in this application.

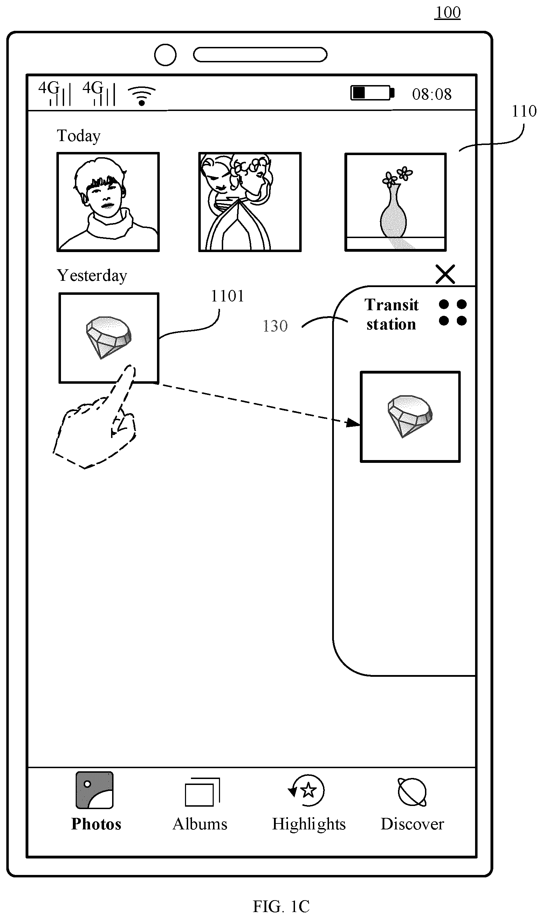

**FIG. 1C to FIG. 1E** **are diagrams of other UIs for sharing the data in the application A to the application B through the drag path.**

For example, the application A may be the gallery application, and the application B may be the instant messaging application.

As shown in FIG. 1C, the application interface 110 of the gallery application is displayed on the electronic device 100, and the plurality of pictures are displayed in the application interface 110. The electronic device 100 may receive a touch and hold operation and a drag operation performed by the user on the picture 1101 in the plurality of pictures, and temporarily store the picture 1101 in a transit station 130.

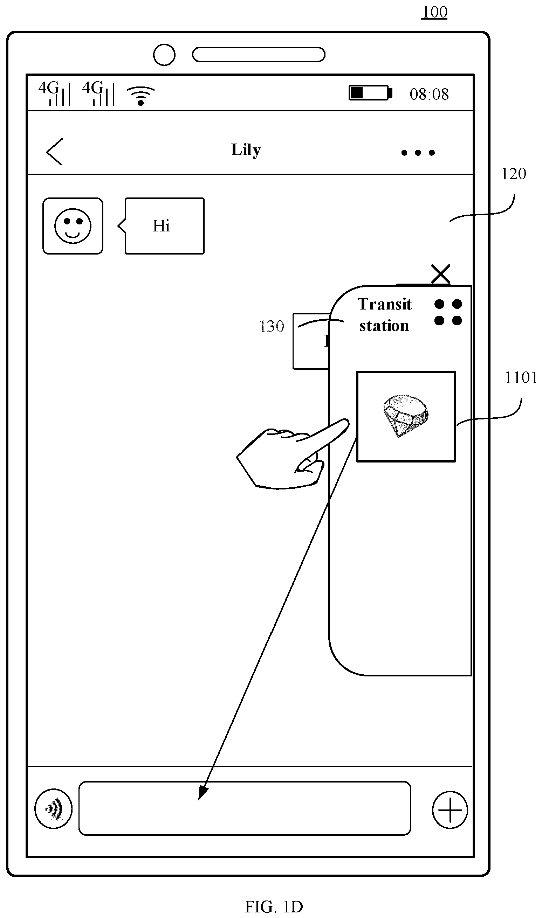

Then, as shown in FIG. 1D, the electronic device 100 may start the instant messaging application, and display the application interface 120 of the instant messaging application. The electronic device 100 may receive a touch and hold operation and a drag operation performed by the user on the picture 1101 in the transit station 130, and share the picture 1101 to the contact "Lily".

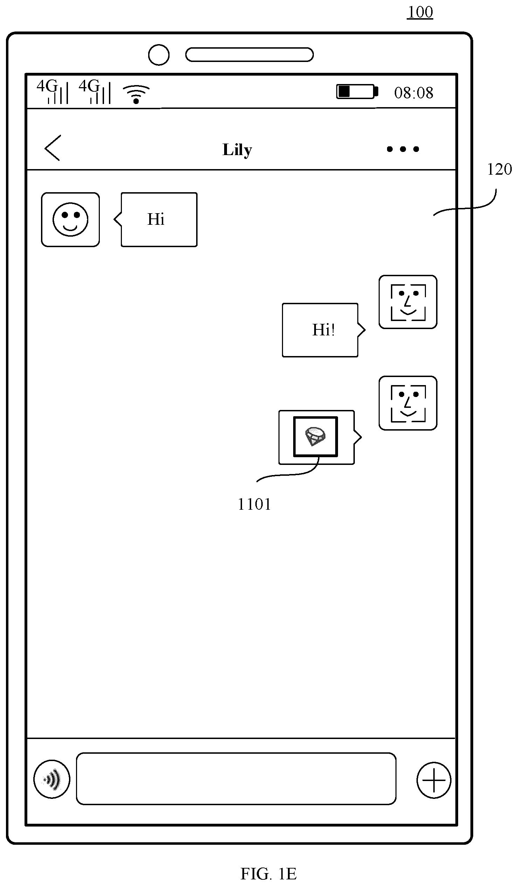

As shown in FIG. 1E, after the user shares the picture 1101 in the transit station 130 to the contact "Lily", the electronic device 100 may display the shared picture 1101 in the application interface 120.

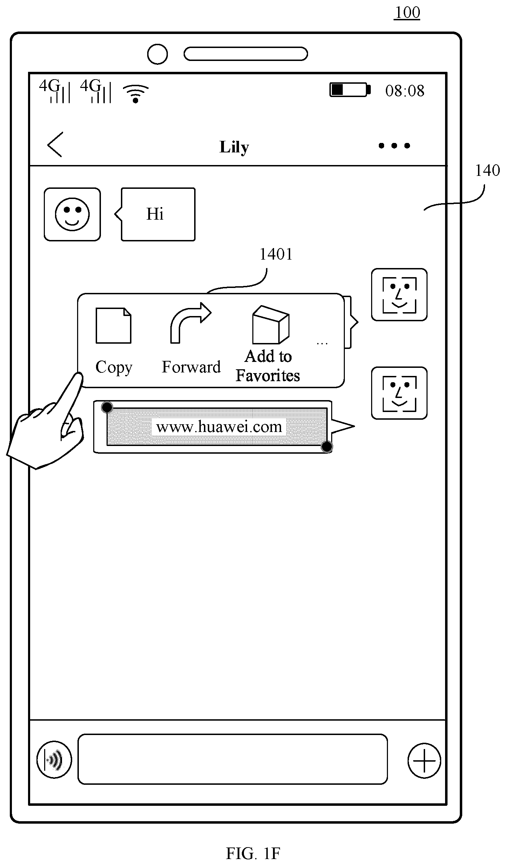

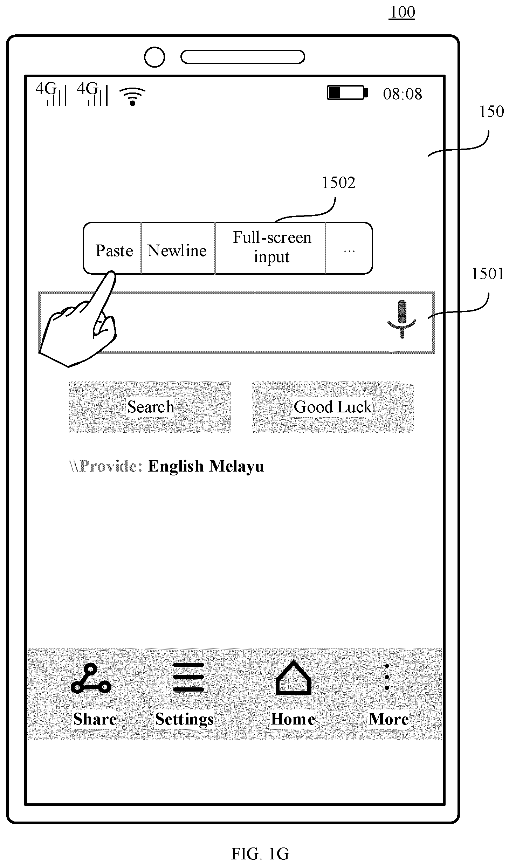

**FIG. 1F** **and** **FIG. 1G** **are diagrams of UIs for sharing data in the application B to an application C through the clipboard path.**

The clipboard path on the same device may mean: The user starts the application A, copies or cuts data in the application A, and temporarily stores the data in the application A in a clipboard of the electronic device 100. The user then starts the application B, and shares, to the application B, the data that is temporarily stored in the clipboard of the electronic device 100 and that is in the application A.

For example, the application B may be the instant messaging application, and the application C may be a browser application.

As shown in FIG. 1F, an application interface 140 of the instant messaging application is displayed on the electronic device 100, and a dialog box of the contact "Lily" is displayed in the application interface 140. The dialog box may include a plurality of chat records, and one chat record may be a website link "www.huawei.com".

The electronic device 100 receives a touch and hold operation of the user on the website link. In response to the touch and hold operation of the user, the electronic device 100 may display a prompt box 1401 shown in FIG. 1F. The prompt box 1401 displays a plurality of options, for example, an option Copy, an option Forward, and an option Favorites.

As shown in FIG. 1F, the electronic device 100 may receive an input operation (for example, a tap) of the user on the option Copy. In response to the input operation of the user, the electronic device 100 may store the website link "www.huawei.com" in the clipboard.

Then, the electronic device 100 starts the browser application. As shown in FIG. 1G, the electronic device 100 displays a user interface 150 of the browser application. The user interface 150 includes a text input box 1501, and the text input box 1501 is configured to receive a website address or text entered by the user.

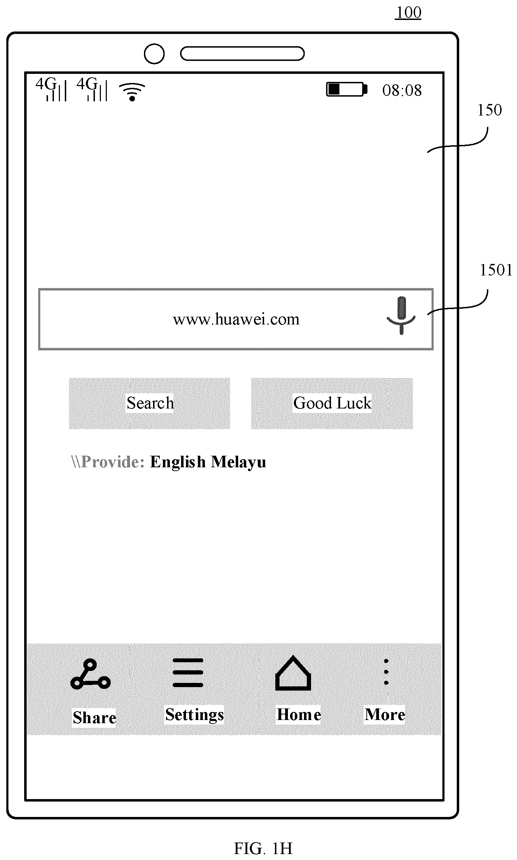

The user may touch and hold the text input box 1501. In response to an input operation of the user, the electronic device 100 may display prompt information 1502. The prompt information 1502 displays a plurality of options, for example, an option Paste, an option Newline, and an option Full-screen input. As shown in FIG. 1G, the electronic device 100 may receive an input operation (for example, a tap) of the user on the option Paste. In response to the input operation of the user, the electronic device 100 may display, in the text input box 1501 shown in FIG. 1H, the website link "www.huawei.com" stored in the clipboard, and the user does not need to enter the website link through a keyboard.

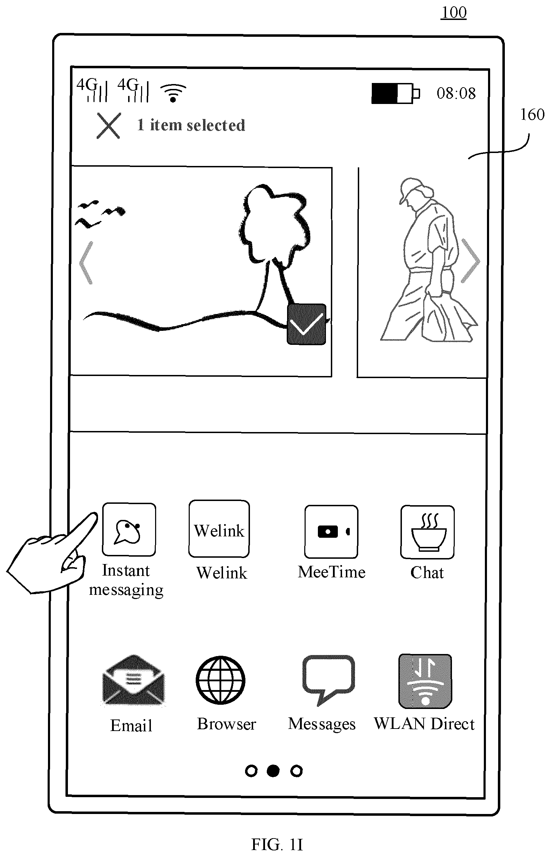

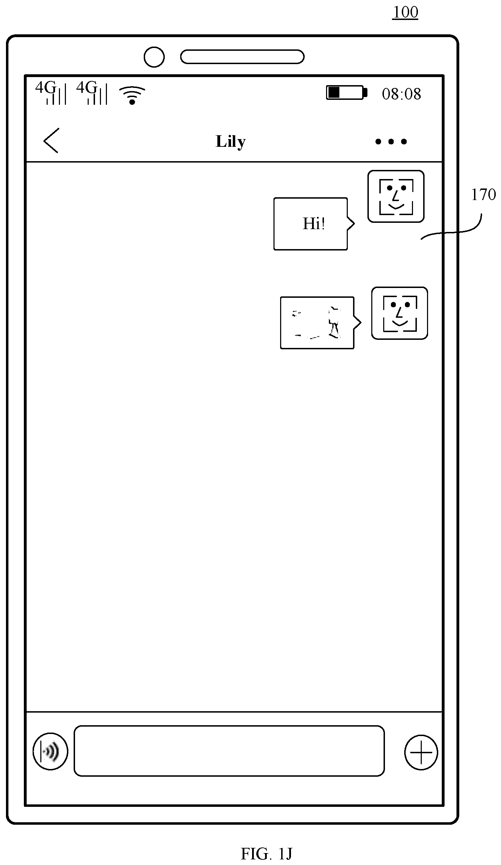

**FIG. 1I** **and** **FIG. 1J** **are diagrams of UIs for sharing data in the application B to the application C through the cross-application path.**

The cross-application path may mean: The user starts the application A, selects data in the application A, and then selects an application icon of the application B, to share the selected data to the application B.

For example, the application A may be the instant messaging application, and the application B may be the instant messaging application.

As shown in FIG. 1I, the electronic device 100 may display a user interface 160 of the application A. The user interface 160 may include a picture selected by the user and icons of a plurality of applications. The electronic device 100 may receive an input operation (for example, a tap) of the user on an icon of the instant messaging application. In response to the input operation of the user, the electronic device 100 may share the selected picture to the instant messaging application.

As shown in FIG. 1J, the electronic device 100 displays a user interface 170 of the instant messaging application, and the user interface 170 includes the picture shared by the gallery application to the instant messaging application.

The drag path in the same device, the clipboard path in the same device, and the cross-application path are merely used to explain this application, and there may be more other data sharing paths between the two applications on the same device. This is not limited in this application either.

The drag path in the same device, the clipboard path in the same device, and the cross-application path in the same device are all determined under active operations of the user. In some embodiments, data can be automatically shared between the two applications on the same device without a user operation. Such a sharing path for automatically sharing the data between the two applications on the same device may be referred to as a cross-application automatic path.

**A data sharing path between the two applications on the different devices may also include the drag path, the clipboard path, the cross-device path, and the like. The two applications on the different devices may be the same or different.**

For example, two devices may be an electronic device 100 and an electronic device 200, and a communication connection is established between the electronic device 100 and the electronic device 200.

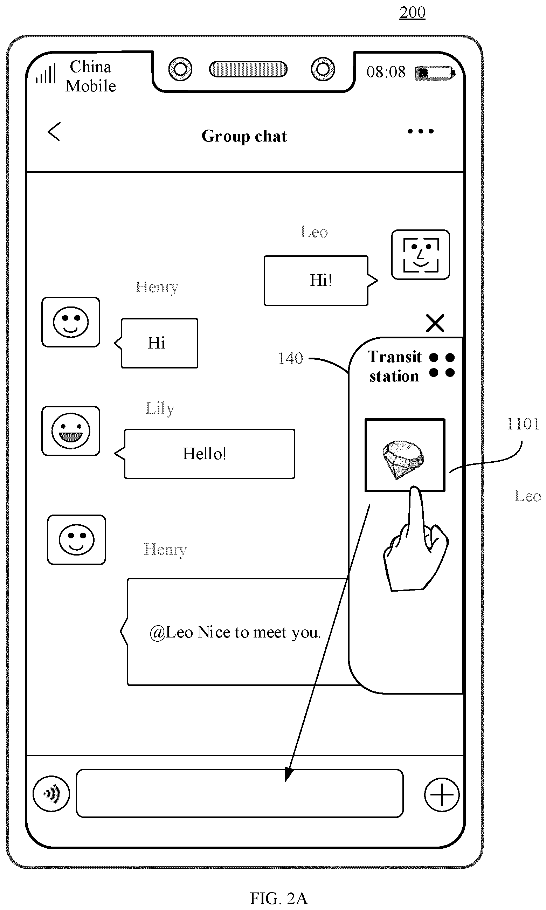

**FIG. 2A to FIG. 2G** **are diagrams of UIs for sharing data between the two applications on the different devices.**

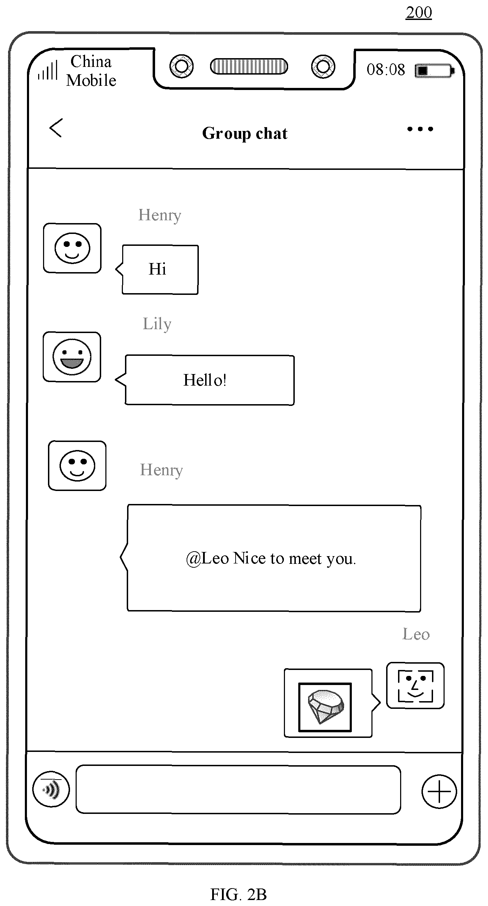

**FIG. 2A** **and** **FIG. 2B** **are diagrams of UIs for sharing data in an application A to an application B through the drag path.**

The drag path between the different devices may be: A user starts an application A on the electronic device 100, selects and drags the data in the application A, and stores the data in the application A in a transit station of the electronic device 100. The electronic device 100 and the electronic device 200 may synchronize data stored in their respective transit stations with each other. The electronic device 200 may receive an operation of the user, and send data in the transit station of the electronic device 200 to the application B on the electronic device 200. The data in the transit station of the electronic device 200 may include the data in the application A.

For example, the application A may be an instant messaging application on the electronic device 100. The application B may also be an instant messaging application on the electronic device 200.

Refer to the descriptions in the embodiments in FIG. 1C and FIG. 1D. The electronic device 100 may receive a user operation to temporarily store the picture 1101 in the gallery application in the transit station 130. The electronic device 100 and the electronic device 200 may synchronize data temporarily stored in their respective transit stations with each other.

Refer to FIG. 2A. The electronic device 200 may receive an operation of the user and display a transit station 140, where the picture 1101 is displayed in the transit station 140. The electronic device 200 may receive a touch and hold operation and a drag operation performed by the user on the picture 1101 in the transit station 140, and share the picture 1101 to a contact "Group chat".

As shown in FIG. 2B, after the user shares the picture 1101 in the transit station 140 of the electronic device 200 to the contact "Group chat", the electronic device 200 may display the picture 1101 in a dialog box of the contact "Group chat". In this way, the data sharing between the two applications on the different devices is implemented in a sharing manner of using the drag path.

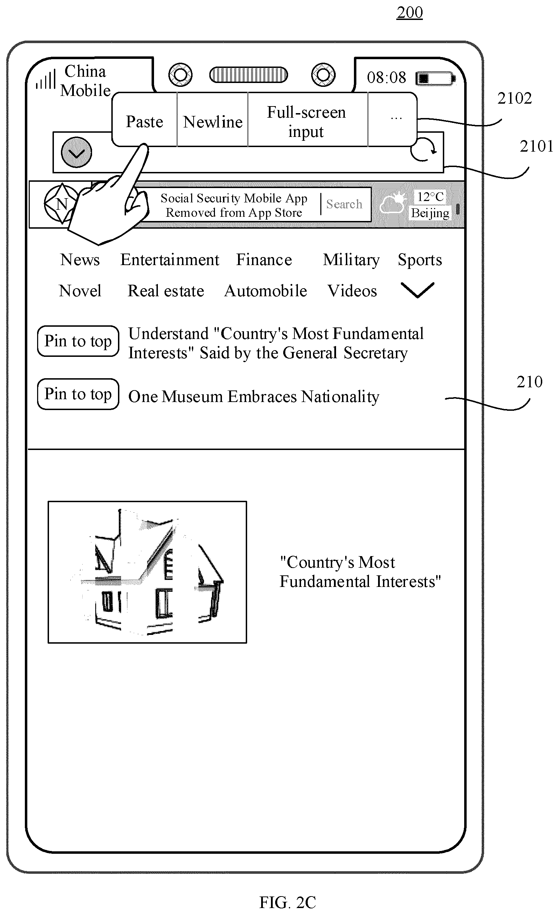

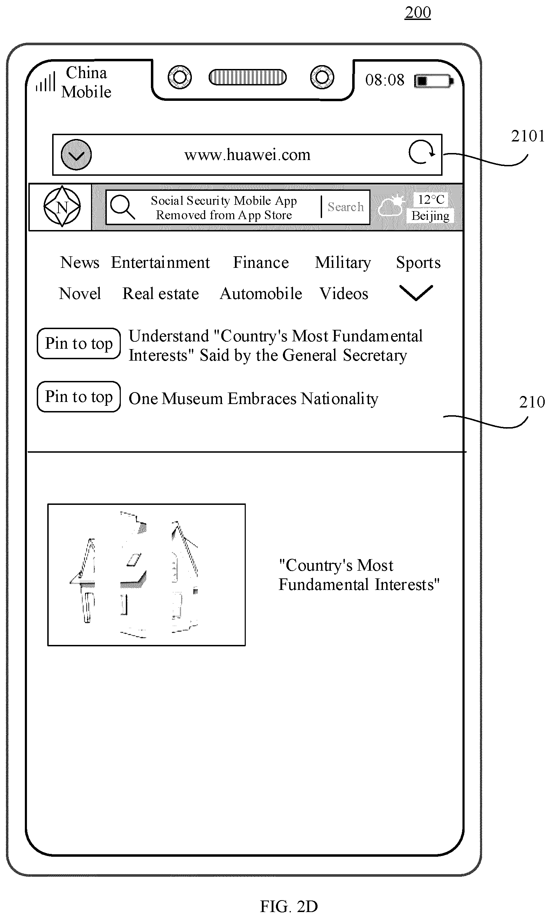

**FIG. 2C** **and** **FIG. 2D** **are diagrams of UIs for sharing data in an application A to an application B through the clipboard path.**

The clipboard path between the different devices may be: The user starts the application A on the electronic device 100, copies or cuts data in the application A, and stores the data in the application A in the clipboard of the electronic device 100. The electronic device 100 and the electronic device 200 may synchronize data stored in their respective clipboards with each other. The electronic device 200 may receive an operation of the user, and send data in the clipboard of the electronic device 200 to the application B on the electronic device 200. The data in the clipboard of the electronic device 200 may include the data in the application A.

For example, the application A may be an instant messaging application on the electronic device 100. The application B may be a browser application on the electronic device 200.

Refer to the descriptions in the embodiments in FIG. 1F and FIG. 1G. The electronic device 100 may receive a user operation and store the website link "www.huawei.com" in the instant messaging application in the clipboard of the electronic device 100. The electronic device 100 and the electronic device 200 may synchronize data temporarily stored in their respective clipboards with each other.

Refer to FIG. 2C. The electronic device 200 may receive a user operation to start the browser application, and display a user interface 210 of the browser application. The user interface 210 includes a text input box 2101, and the text input box 2101 is configured to receive a website address or text entered by the user.

The user may touch and hold the text input box 2101. In response to an input operation of the user, the electronic device 200 may display prompt information 2102. The prompt information 2102 displays a plurality of options, for example, an option Paste, an option Newline, and an option Full-screen input. As shown in FIG. 2C, the electronic device 200 may receive an input operation (for example, a tap) of the user on the option Paste. In response to the input operation of the user, the electronic device 200 may display, in the text input box 2101 shown in FIG. 2D, the website link "www.huawei.com" stored in the clipboard. In this way, the data sharing between the two applications on the different devices is implemented in a sharing manner of using the clipboard path.

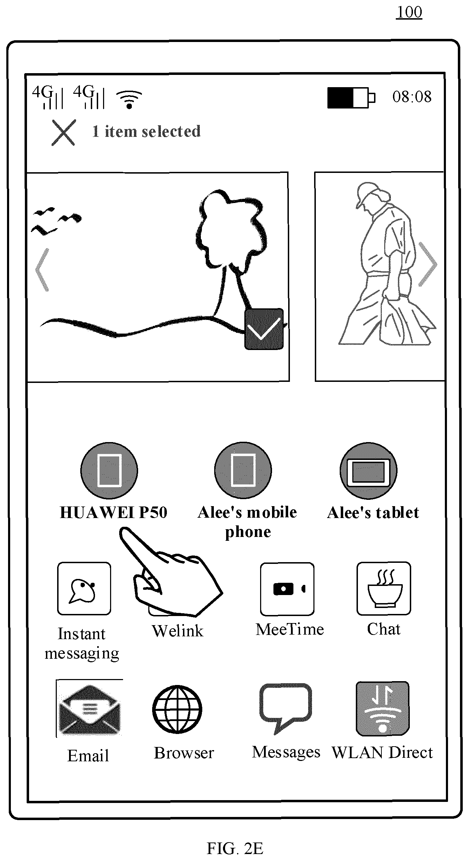

**FIG. 2E to FIG. 2G** **are diagrams of UIs for sharing data in an application B to an application C through the cross-device path.**

The cross-device path may be: The user starts the application A in the electronic device 100, selects data in the application A, and then selects a device icon of the electronic device 200, to share the selected data to the electronic device 200.

For example, the application A may be a gallery application on the electronic device 100. The application B may be a gallery application on the electronic device 200.

As shown in FIG. 2E, the electronic device 100 may display a user interface of the gallery application on the electronic device 100. The user interface of the gallery application may include a picture selected by the user, icons of a plurality of nearby devices (for example, an option "HUAWEI P50", an option "Alee's mobile phone", and an option "Alee's tablet"), and application icons of a plurality of applications. The electronic device 100 may receive an input operation (for example, a tap) of the user on the option "HUAWEI P50". In response to the input operation of the user, the electronic device 100 may share the selected picture to the electronic device 200. A device identifier of the electronic device 200 may be "HUAWEI P50".

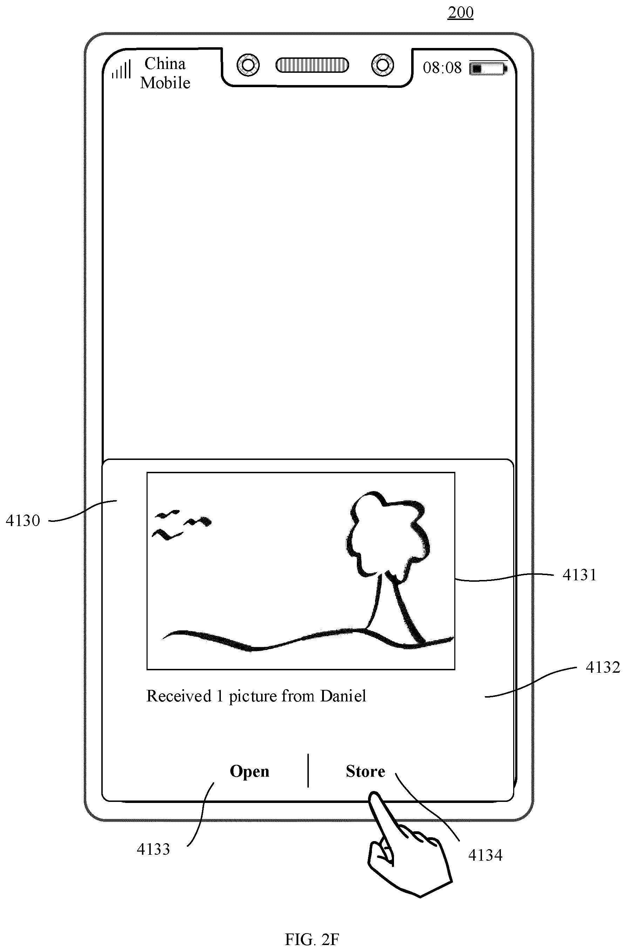

After the electronic device 200 receives the picture sent by the electronic device 100, the electronic device 200 may display a receive window 4130 shown in FIG. 2F. The receive window 4130 may include a thumbnail 4131 of the picture shared by the electronic device 100 to the electronic device 200, a receiving prompt 4132, an open control 4133, and a store control 4134. The receiving prompt 4132 may be used to prompt the user that the electronic device 200 has currently received the picture sent by the electronic device 100. A prompt type of the receiving prompt 4132 may be any one or more of a text prompt (for example, "Received the picture sent by Daniel to you"), a picture prompt, an animation prompt, a video prompt, and the like. The open control 4133 may be configured to trigger the electronic device 200 to display a display interface including the picture sent by the electronic device 100. The store control 4134 may be configured to trigger the electronic device 200 to store, in a specified local storage path of the electronic device 200, the picture sent by the electronic device 100.

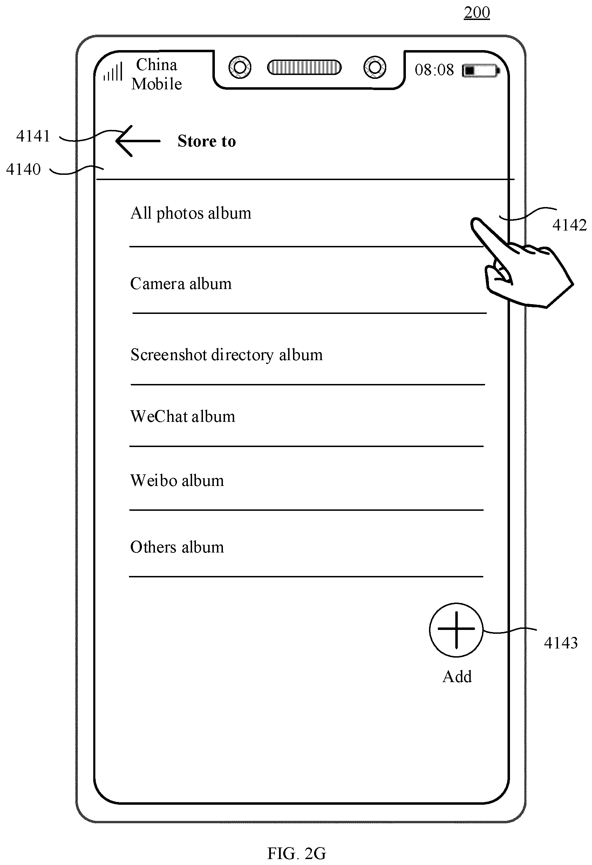

The electronic device 200 may receive an input (for example, a tap) of the user on the store control 4134. In response to the input, the electronic device 200 may display a storage interface 4140 shown in FIG. 2G.

As shown in FIG. 2G, the storage interface 4140 may include options of one or more storage paths, a control 4141 for returning to a previous page, and the like. Because the electronic device 100 shares the picture to the electronic device 200, the options of the one or more storage paths may include one or more album options (for example, an option "All photos album" 4142, an option "Camera album", an option "Screenshot directory album", an option "Chat application album", an option "MeeTime application album", and an option "Others album"). Optionally, the storage interface 4140 may further include an add control 4143, and the add control 4143 may be used to trigger the electronic device 200 to add an album option on the storage interface 4140.

The electronic device 200 may receive an input (for example, a tap) of the user for the option "All photos album" 4142. In response to the input, the electronic device 200 may store, in a storage path corresponding to the All photos album, the picture shared by the electronic device 100 to the electronic device 200. After the electronic device 200 stores, in the storage path corresponding to the All photos album, the picture shared by the electronic device 100 to the electronic device 200, when the electronic device 200 starts an album interface of the All photos album in the gallery application, the album interface of the All photos album may include a thumbnail of the picture shared by the electronic device 100 to the electronic device 200.

Optionally, the electronic device 200 may not display the user interfaces shown in FIG. 2F and FIG. 2G. After the electronic device 200 receives the picture shared by the electronic device 100, the electronic device 200 may directly store the received picture in a gallery of the electronic device 200.

The drag path between the different devices, the clipboard path between the different devices, and the cross-device path are merely used to explain this application, and there may be more other data sharing paths between the two applications on the different devices. This is not limited in this application either.

The drag path between the different devices, the clipboard path between the different devices, and the cross-device path between the different devices are all determined under active operations of the user. In some embodiments, a device can automatically share data with another device without a user operation. Such a sharing path for automatically sharing the data by a device with another device may be referred to as a cross-device automatic path.

It can be learned based on the descriptions of FIG. 1A to FIG. 1J that data may be shared between two applications of a same device through different paths.

Different applications have different definitions for data, and different sharing paths have different data definition standards, so that data shared between applications through each sharing path needs to meet a data definition standard of each sharing path.

Before the application A sends the shared data to the application B, the application A needs to obtain a data definition standard of a current sharing path, and define the shared data based on the data definition standard of the current sharing path, to obtain redefined shared data. Then, the application A sends the redefined shared data to the application B through the current sharing path.

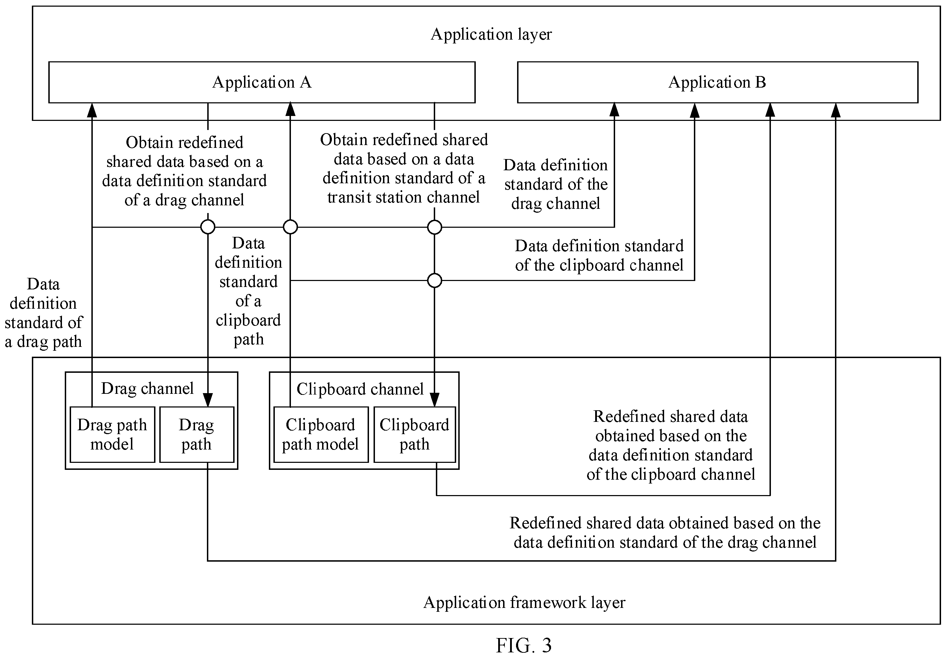

As shown in FIG. 3, the data sharing path between the two applications on the same device may include but is not limited to either of the drag path and the clipboard path. Data definition standards corresponding to the drag path and the clipboard path are different.

For example, when the shared data is an image, a type definition of the image by the drag path may be "image", and a type definition of the image by the clipboard path may be "picture".

For another example, when the shared data is a video, a type definition of the video by the drag path may be "video", and a type definition of the video by the clipboard path may be "vlog".

Before the application A sends the shared data to the application B through the drag path or the clipboard path, the application A needs to obtain, from a drag path model or a clipboard path model, respective data definition standards corresponding to the paths, and redefine the shared data based on the data definition standard of the drag path or the clipboard path, to obtain redefined shared data. Then, the application A sends the redefined shared data to the drag path or the clipboard path, and the drag path or the clipboard path sends the redefined shared data to the application B.

After the application B receives the redefined shared data, the application B needs to obtain, from the drag path model or the clipboard path model, a data definition standard corresponding to each path, and parse the redefined shared data based on the data definition standard in the drag path or the clipboard path, to obtain content of the shared data. Then, the user may use the shared data in the application B.

It can be learned from the foregoing process that, different sharing paths have different data definition standards, and a sender of the shared data needs to redefine the shared data based on the data definition standards of the different sharing paths. A receiver of the shared data also needs to parse the shared data based on the data definition standards of the different sharing paths to obtain the shared data. Consequently, a processing process of receiving and sending data is complex.

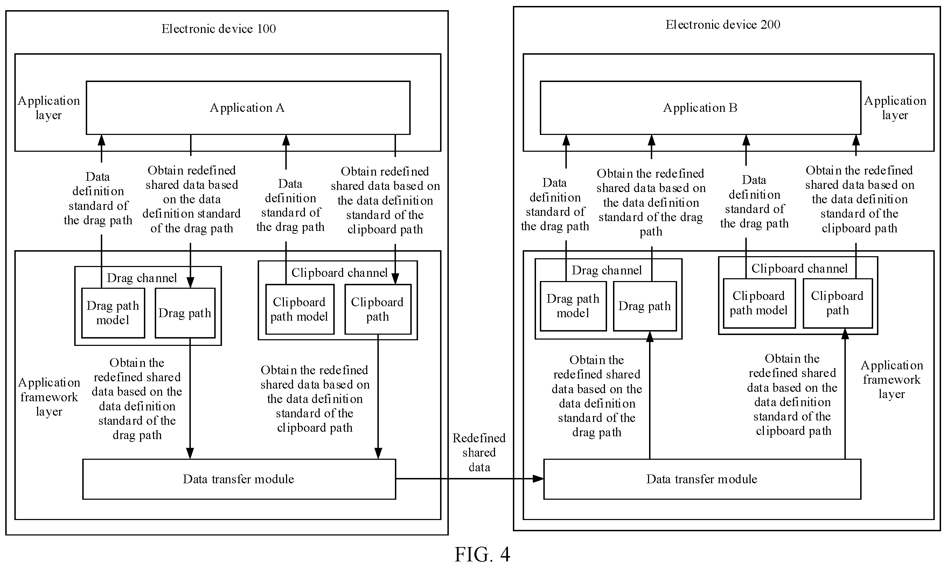

FIG. 4 shows a specific implementation of sharing data between the two applications on the different devices through the different sharing paths. FIG. 4 is similar to FIG. 3, and a difference lies in that FIG. 3 is a specific implementation of sharing data between the two applications on the same device through the different sharing paths, and FIG. 4 is a specific implementation of sharing data between the two applications on the different devices through the different sharing paths. For specific descriptions of an embodiment in FIG. 4, refer to the descriptions in FIG. 3. It can be learned from FIG. 4 that, FIG. 4 has a same problem as FIG. 3. Different sharing paths have different data definition standards, and a sender of shared data needs to redefine the shared data based on the different data definition standards. A receiver of the shared data also needs to parse the shared data based on the different data definition standards. Consequently, a processing process of receiving and sending data is complex.

Based on the foregoing problems, this application provides a data sharing method. The method includes: For different applications and different sharing paths, an electronic device 100 provides a set of unified data definition standards (which may be referred to as a specified data definition standard). In this method, a sender of shared data may not need to consider a type of a sharing path, but only needs to define the shared data based on the specified data definition standard, and then send data to a receiver of the shared data through the sharing path. The receiver of the shared data also does not need to consider a type of a sharing path, and only needs to parse redefined shared data based on the specified data definition standard, to obtain the shared data. This simplifies a processing procedure of data transmission between the sender and the receiver.

The specified data definition standard may include an attribute definition of the data and a content definition of the data. The attribute definition of the data may include but is not limited to a type definition, a size definition, a creation time definition, and a content definition of the data. When a type of the data is file data, the content definition of the data may include a storage path of the data on the device, for example, the storage path may be a uniform resource identifier (uniform resource identifier, URI) of the data. When the type of the data is non-file data, the content definition of the data may include text content of the data. For specific descriptions of the specified data definition standard, refer to descriptions in the embodiment of Table 1.

This application may be applied to data sharing between two applications on a same device. In some embodiments, an application A on the electronic device 100 automatically shares data with an application B on the electronic device 100 without a user operation. The application A may obtain the specified data definition standard, and define the data (for example, first data) in the application A based on the specified data definition standard, to obtain redefined first data. The application B may obtain the redefined first data. The application B may parse the redefined first data based on the specified data definition standard, to obtain the first data, and use the first data. In another embodiment, the application A on the electronic device 100 may alternatively receive a user operation. The user operation is used to select the first data in the application A and send the first data to the application B on the electronic device 100 through a cross-application manual path. Specifically, the application A may obtain the specified data definition standard, and define the first data based on the specified data definition standard, to obtain the redefined first data. Then, the application A sends the redefined first data to the application B. The application B may also obtain the specified data definition standard, and parse the redefined first data based on the specified data definition standard to obtain the first data. The application B may use the first data. This simplifies a processing procedure of data transmission between the two applications on the same device.

For example, the user may share a picture in a gallery application to an instant messaging application through any one of a drag path, a clipboard path, a cross-application manual path, or a cross-application automatic path. Data definition standards of the four sharing paths are the same, regardless of the drag path, the clipboard path, the cross-application manual path, or the cross-application automatic path. The gallery application only needs to redefine the picture in the gallery application based on the specified data definition standard, to obtain a redefined picture, and then the gallery application sends the redefined picture to the instant messaging application through any selected sharing path. The instant messaging application also does not need to pay attention to a sharing path through which the redefined picture is received, and the instant messaging application only needs to parse the redefined picture based on the specified data definition standard, to obtain the picture and use the picture. This simplifies a processing procedure of data transmission between the gallery application and the instant messaging application on the same device.

This application may be applied to data sharing between two applications on different devices. The electronic device 100 establishes a communication connection to an electronic device 200. In some embodiments, an application A on the electronic device 100 automatically shares data with an application B on the electronic device 200 without a user operation. In another embodiment, the application A on the electronic device 100 may also share data with the application B on the electronic device 200 based on a user operation. Specifically, the application A on the electronic device 100 may obtain the specified data definition standard and data (for example, first data) in the application A, and define the first data based on the specified data definition standard, to obtain redefined first data. The electronic device 100 sends the redefined first data to the electronic device 200 through the communication connection. The application B on the electronic device 200 may obtain the redefined first data through any one of a drag path, a clipboard path, a cross-device manual path, or a cross-device automatic path, and parse the redefined first data based on the specified data definition standard, to obtain the first data, and use the first data. This simplifies a processing procedure of data transmission between the two applications on the different devices.

In some embodiments, the redefined first data may also be referred to as first definition data.

For example, the user may share a picture in a gallery application in the electronic device 100 to the electronic device 200 through any one of a drag path, a clipboard path, a cross-device manual path, or a cross-device automatic path. Data definition standards of the four sharing paths are the same, regardless of the drag path, the clipboard path, the cross-device manual path, or the cross-device automatic path. The gallery application in the electronic device 100 only needs to redefine the picture in the gallery application based on the specified data definition standard, to obtain a redefined picture, and then the gallery application sends the redefined picture to a communication module in the electronic device 100 through any sharing path. A communication module in the electronic device 200 may receive the redefined picture. A gallery application in the electronic device 200 may obtain the redefined picture through a corresponding sharing path. The gallery application in the electronic device 200 also does not need to pay attention to a sharing path through which the redefined picture is received, and the gallery application in the electronic device 200 only needs to parse the redefined picture based on the specified data definition standard, to obtain the picture and use the picture. This simplifies a processing procedure of data transmission between the two gallery applications on the different devices.

The following describes an architecture of a system according to an embodiment of this application.

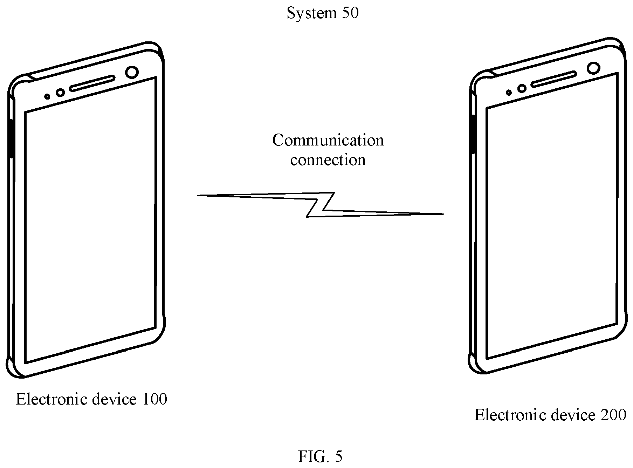

FIG. 5 is a diagram of an architecture of a system 50 according to an embodiment of this application.

The system 50 may include one electronic device, or the system 50 may include a plurality of electronic devices. The system 50 shown in FIG. 5 includes two electronic devices. For example, the two electronic devices may be an electronic device 100 and an electronic device 200.

A device type of the electronic device may include but is not limited to any one of the following: a mobile phone, a tablet computer, a desktop computer, a laptop computer, a handheld computer, a notebook computer, a smart screen, a wearable device, an augmented reality (augmented reality, AR) device, a virtual reality (virtual reality, VR) device, an artificial intelligence (artificial intelligence, AI) device, a head unit, a smart headset, and a game console, and may further include an internet of things (internet of things, IOT) device, a smart household appliance like a smart water heater, a smart lamp, or a smart air conditioner, or the like. This is not limited thereto. The plurality of devices in the system 10 may further include a non-portable terminal device like a laptop (laptop) computer having a touch-sensitive surface or a touch panel or a desktop computer having a touch-sensitive surface or a touch panel, and the like.

A software operating system (operating system, OS) of the electronic device includes but is not limited to HarmonyOS^{®}, Android^{®}, iOS^{®}, Windows^{®} and Linux^{®}. HarmonyOS^{®} is Huawei's HarmonyOS. Optionally, a same software operating system, for example, HarmonyOS^{®}, may be configured for the plurality of electronic devices.

The electronic device 100 and the electronic device 200 may establish a communication connection in any one of the following manners.

Manner 1: The plurality of electronic devices may be connected to a same network. For example, the plurality of electronic devices may be connected to a same local area network to establish the communication connection.

Manner 2: The plurality of electronic devices may alternatively log in to a same system account to establish the communication connection. For example, system accounts to which the plurality of electronic devices log in may be all "HW1234".

Manner 3: System accounts to which the plurality of electronic devices log in may all belong to a same account group. For example, the system accounts to which the plurality of electronic devices log in includes "HW001", "HW002", and "HW003". The system accounts "HW001", "HW002", and "HW003" belong to an account group "HUAWEI Home".

Manner 4: The plurality of electronic devices may establish the communication connection in a manner like near field communication (Near Field Communication, NFC), Bluetooth (Bluetooth, BT), a wireless local area network (wireless local area networks, WLAN), for example, wireless fidelity point-to-point (wireless fidelity point to point, Wi-Fi P2P), or an infrared (infrared, IR) technology.

Manner 5: The plurality of electronic devices may establish a temporary account group by scanning a same QR code, to establish a networking connection to implement communication.

This is not limited to the foregoing five manners. The electronic device 100 may alternatively establish the communication connection in another manner. This is not limited in embodiments of this application. In addition, the plurality of electronic devices may alternatively establish the communication connection by combining any manners of the foregoing manners. This is not limited in embodiments of this application.

When the system 50 includes only one electronic device (for example, the electronic device 100), the electronic device 100 may implement, based on the method provided in this application, data sharing between two applications on a same device. This simplifies the processing procedure of data transmission between the two applications on the same device. Specifically, the application A may obtain the specified data definition standard, and define data (for example, the first data) in the application A based on the specified data definition standard, to obtain the redefined first data. The application B may obtain the redefined first data. The application B may parse the redefined first data based on the specified data definition standard, to obtain the first data, and use the first data. In another embodiment, the application A on the electronic device 100 may also receive a user operation. The user operation is used to select the first data in the application A and send the first data to the application B on the electronic device 100 through a cross-application manual path. Specifically, the application A may obtain the specified data definition standard, and define the first data based on the specified data definition standard, to obtain the redefined first data. Then, the application A sends the redefined first data to the application B. The application B may also obtain the specified data definition standard, and parse the redefined first data based on the specified data definition standard to obtain the first data. The application B may use the first data. This simplifies a processing procedure of data transmission between the two applications on the same device.

When the system 50 includes a plurality of electronic devices (for example, the electronic device 100 and the electronic device 200), the electronic device 100 and the electronic device 200 may implement, based on the method provided in this application, data sharing between two applications on different devices. This simplifies a processing procedure of data transmission between the two applications on the different devices. Specifically, in some embodiments, the application A on the electronic device 100 automatically shares data with the application B on the electronic device 200 without a user operation. In another embodiment, the application A on the electronic device 100 may also share data with the application B on the electronic device 200 based on a user operation. Specifically, the application A on the electronic device 100 may obtain the specified data definition standard and data (for example, first data) in the application A, and define the first data based on the specified data definition standard, to obtain redefined first data. The electronic device 100 sends the redefined first data to the electronic device 200 through the communication connection. The application B on the electronic device 200 may obtain the redefined first data through any one of a drag path, a clipboard path, a cross-device manual path, or a cross-device automatic path, and parse the redefined first data based on the specified data definition standard, to obtain the first data, and use the first data. This simplifies a processing procedure of data transmission between the two applications on the different devices.

In some embodiments, the electronic device 200 may also be a cloud device like a server, to implement data sharing between the electronic device and the server.

In the following embodiments of this application, an example in which the electronic device 100 is a mobile phone is used for description, and the electronic device 200 may also have a same or similar component.

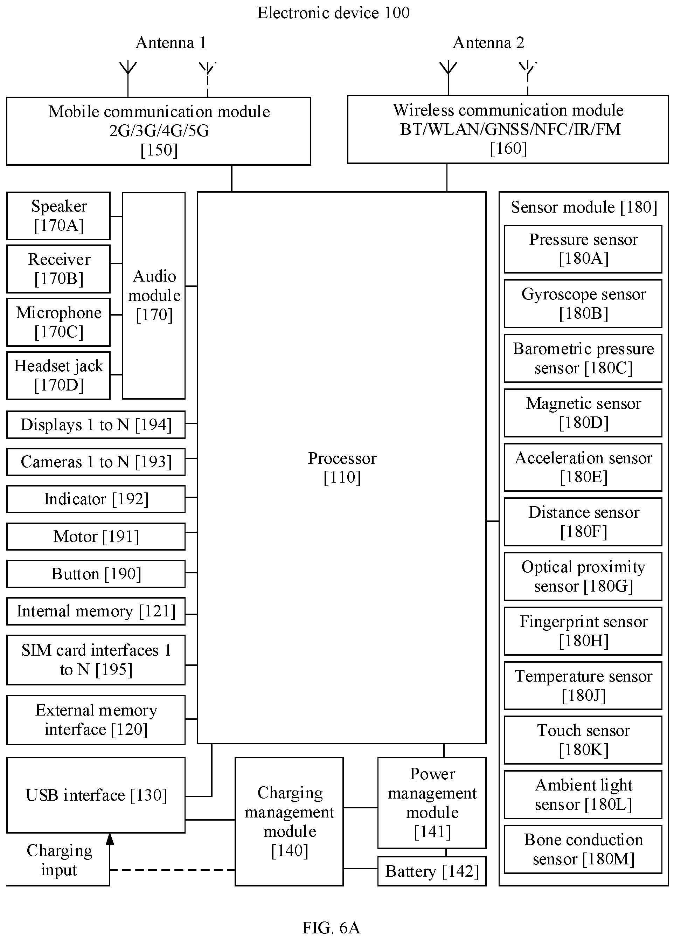

FIG. 6A is a schematic diagram of a structure of the electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may have more or fewer components than those shown in the figure, or have some components that are combined, or have some components that are split, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger.

The power management module 141 is configured to connect the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component with at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. The baseband processor processes the low-frequency baseband signal, and then transmits a processed signal to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in the same device with the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is an image processing microprocessor, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, or the like.

The electronic device 100 may implement an image shooting function through the ISP, the camera 193, the video codec, the GPU, the display 194, the application processor, and the like.

The ISP is configured to process data fed back by the camera 193.

The camera 193 is configured to capture a static image or a video.

The digital signal processor is configured to process a digital signal. In addition to the digital image signal, the digital signal processor may further process another digital signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, for example, image recognition, facial recognition, speech recognition, and text understanding, can be implemented through the NPU.

The internal memory 121 may include one or more random access memories (random access memory, RAM) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like.

The non-volatile memory may include a magnetic disk storage device and a flash memory (flash memory).

The external memory interface 120 may be configured to connect to an external non-volatile memory, to expand a storage capability of the electronic device 100. The external non-volatile memory communicates with the processor 110 through the external memory interface 120, to implement a data storage function. For example, a file like music or a video is stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode audio signals. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. The gyroscope sensor 180B may be configured to determine a moving posture of the electronic device 100. The barometric pressure sensor 180C is configured to measure barometric pressure. The magnetic sensor 180D includes a Hall sensor. The acceleration sensor 180E may detect accelerations in various directions (usually on three axes) of the electronic device 100. The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch device". The bone conduction sensor 180M may obtain a vibration signal.

The button 190 includes a power button, a volume button, and the like. The button 190 may be a mechanical button, or may be a touch button.

The motor 191 may generate a vibration prompt. The motor 191 may be configured to provide an incoming call vibration prompt or a touch vibration feedback. For example, touch operations performed on different applications (for example, photographing and audio playback) may correspond to different vibration feedback effects. The motor 191 may also correspond to different vibration feedback effects for touch operations performed on different areas of the display 194.

The indicator 192 may be an indicator light, may be configured to indicate a charging status and a power change, and may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

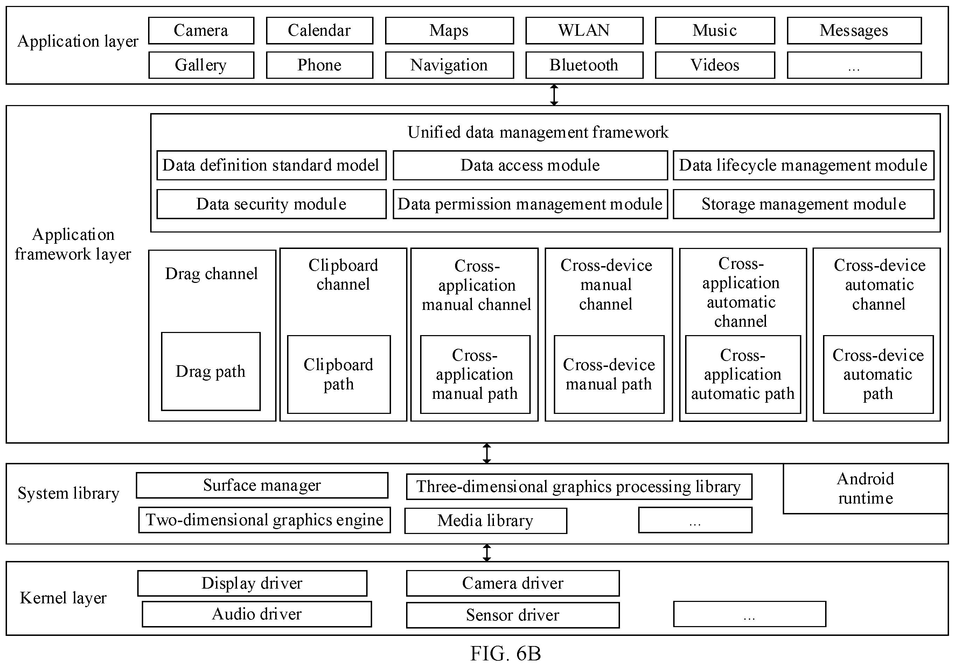

FIG. 6B is a block diagram of a software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 6B, the application package may include applications such as Camera, Gallery, Calendar, Phone, Maps, Navigation, WLAN, Bluetooth, Music, Videos, and Messages.

The application framework layer provides an application programming interface (application programming interface, API) for applications at the application layer. The application framework layer includes some predefined functions.

As shown in FIG. 6B, the application framework layer may include a unified data management framework (unified data management framework, UDMF), a plurality of types of data sharing paths, and the like.

The unified data management framework includes a plurality of functional modules, and the plurality of functional modules include but are not limited to: a data definition standard model, a data access module, a data lifecycle management module, a data security module, a data permission management module, a storage management module, and the like.

The type of the data sharing path includes but is not limited to: a drag path, a clipboard path, a cross-application manual path, a cross-device manual path, a cross-application automatic path, a cross-device automatic path, and the like. The drag path, the clipboard path, the cross-application manual path, and the cross-application automatic path may be used for a data sharing path between two applications on a same device. The drag path, the clipboard path, the cross-device manual path, and the cross-device automatic path may be used for a data sharing path between two applications on different devices. This is not limited to these data sharing paths. In some embodiments, data sharing may be implemented between the two applications on the same device or between the two applications on the different devices without using the foregoing data sharing paths. The foregoing data sharing paths are merely used to describe this application. This is not limited in this application.

Optionally, in some embodiments, a data sharing path between the two applications on the same device, for example, the drag path or the clipboard path, and a data sharing path between the two applications on the different devices, for example, the drag path or the clipboard path, may be a same path or different paths. This is not limited in this application.

The specified data definition standard is stored in the data definition standard model. The specified data definition standard is used by applications to define shared data.

The data access module is configured to receive redefined shared data sent by an application, and temporarily store the redefined shared data in the unified data management framework.

The data access module is further configured for the application to read the redefined shared data from the unified data management framework.

The data lifecycle management module is configured to manage a lifecycle of the redefined shared data stored in the unified data management framework, for example, delete the redefined shared data or continue to store the redefined shared data.

The data security module is configured to protect security of the redefined shared data stored in the unified data management framework, for example, perform security protection in a manner like encrypted storage.

The data permission management module is configured to: before the application reads the redefined shared data from the unified data management framework, verify whether the application has a capability and permission to access the redefined shared data.

The storage management module is configured to temporarily store the redefined shared data.

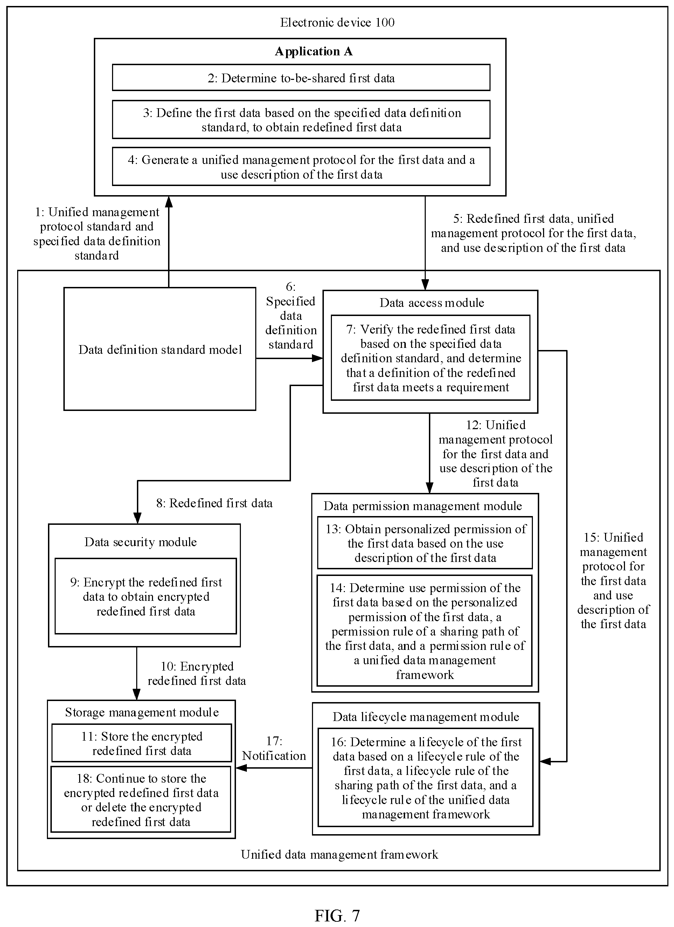

For descriptions of the functional modules in the unified data management framework, refer to the detailed descriptions in the embodiments in FIG. 7 to FIG. 10. Details are not described herein again in this application.

The Android runtime includes a kernel library and a virtual machine. The Android runtime is responsible for scheduling and management of the Android system.

The kernel library includes two parts: One part is a performance function that needs to be invoked by the Java language, and the other part is an Android kernel library.

The application layer and the application framework layer run in the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of two-dimensional and three-dimensional layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

**The specified data definition standard is described and shared data is defined based on the specified data definition standard.**

The following describes the specified data definition standard stored in the data definition standard model in the unified data management framework.

The specified data definition standard may include an attribute definition of data, and the attribute definition of the data may include but is not limited to a type definition, a size definition, a creation time definition, a content definition of the data, and the like of the data. In this way, the attribute definition of the shared data for the sender is the same as the attribute definition of the shared data for the receiver, to reduce a processing procedure of receiving and sending the data.

This application provides a data definition standard. Before data sharing is performed, different applications need to define shared data based on this standard. After the shared data is received, the different applications also need to perform parsing based on this standard to obtain the shared data. In other words, for different applications and different sharing paths, data definition standards are unified. This implements format unification of the shared data.

A data type may include but is not limited to: plain-text data, formatted text data, rich text data, link data, image data, file data, media file data, folder data, application project data, table data, and the like. In another embodiment, other data may be further included. This is not limited in this application.

The following embodiments of this application are described by using an example in which the attribute definition of the data includes the type definition of the data and the content definition of the data.

**Table 1**

| Category | Data | Type definition of the data | Content definition of the data |
|---|---|---|---|
| (Text) text | Plain-text data | Plain-text | Plain-text content |
| | Formatted text data | styled text | Plain-text content |
| | Rich text data | HTML | Plain-text content |
| | Link data | link | Plain-text content |
| (File) file | Image data | image | URI |
| | Video data | video | URI |
| | Audio data | audio | URI |
| | Document data | word | URI |
| | Presentation file data | powerpoint | URI |
| | Table data | excel | URI |
| | Portable file format data | pdf | URI |
| (System-defined) system-defined | Desktop icon control | appItem | Plain-text content |
| | Data card | form | Plain-text content |
| | High-performance bitmap | pixelmap | Plain-text content |
| (Application-defined) app-defined | Application-defined graph | custom shape | Plain-text content |
| | ... | ... | ... |

As shown in Table 1, text data and file data may be referred to as basic data. This type of data can be transferred across applications, devices, and operating systems. In other words, data that can be transferred across applications, devices, and operating systems is referred to as the basic data.

System-defined data can be transferred across applications and devices in a same operating system. In other words, data that can be transferred across applications and devices in a same operating system is referred to as the system-defined data.

Application-defined data can be transferred across devices and operating systems in a same application. In other words, data that can be transferred across devices and operating systems in a same application is referred to as the system-defined data.

As shown in Table 1, a type definition of the plain-text data defined in the specified data definition standard is "plain-text", and a content definition of the plain-text data is the plain-text content. The type definition of plain-text data can be expressed as text. plain-text.

A type definition of the formatted text data defined in the specified data definition standard is "styled text", and a content definition of the formatted text data is the plain-text content. The type definition of the formatted text data can be expressed as text. styled text.

A type definition of the rich text data defined in the specified data definition standard is "HTML", and a content definition of the rich text data is the plain-text content. The type definition of the rich text data can be expressed as text. HTML.

A type definition of the link data defined in the specified data definition standard is "link", and a content definition of the link data is the plain-text content. The type definition of the link data can be expressed as text. link.

A type definition of the image data defined in the specified data definition standard is "image", and a content definition of the image data is the URI. The URI of the image data indicates a storage path of the image data on a device. A type definition of the image data can be represented as file. image.

A type definition of the video data defined in the specified data definition standard is "video", and a content definition of the video data is the URI. The URI of the video data indicates a storage path of the video data on the device. The type definition of the video data can be represented as file. video.

A type definition of the audio data defined in the specified data definition standard is "audio", and a content definition of the audio data is the URI. The URI of the audio data indicates a storage path of the audio data on the device. The type definition of the audio data can be represented as file. audio.

A type definition of the document data defined in the specified data definition standard is "word", and a content definition of the document data is the URI. The URI of the document data indicates a storage path of the document data on the device. The type definition of the document data can be expressed as file. word.

A type definition of the presentation file data defined in the specified data definition standard is "powerpoint", and a content definition of the presentation file data is the URI. The URI of the presentation file data indicates a storage path of the presentation file data on the device. The type definition of the presentation file data can be represented as file. powerpoint.

A type definition of the table data defined in the specified data definition standard is "excel", and a content definition of the table data is the URI. The URI of the table data indicates a storage path of the table data on the device. The type definition of the table data can be expressed as file. excel.

A type definition of the portable file format data defined in the specified data definition standard is "pdf", and a content definition of the portable file format data is the URI. The URI of the portable file format data indicates a storage path of the portable file format data on the device. The type definition of the portable file format data can be expressed as file.pdf.

A type definition of the desktop icon control defined in the specified data definition standard is "appItem", and a content definition of application project data is the plain-text content. The type definition of the desktop icon control can be represented as SDT. appItem.

A type definition of the data card defined in the specified data definition standard is "form", and a content definition of window data is the plain-text content. The type definition of the data card can be represented as SDT. form.

A type definition of the high-performance bitmap data defined in the specified data definition standard is "pixelmap", and a content definition of the high-performance bitmap data is the plain-text content. The type definition of the high-performance bitmap data can be expressed as SDT. pixelmap.

A type definition of the application-defined graph data defined in the specified data definition standard is "custom shape", and a content definition of the high-performance bitmap data is the plain-text content. The type definition of the application-defined graph data can be expressed as ADT. custom shape.

In other words, for a same type of data, type definitions of the type of data by different applications are the same. For example, for the image data, type definitions of the image data by different applications are "image".

When a type of data is the file data, a content definition of the data may include a URI of the data, and the URI of the data indicates a storage path of the data on the device. In other words, when the content definition of the data is the URI, an application may send the storage path of the data to another application, and does not directly send the content of the data to the another application. When using the data, the another application may obtain the content of the data based on the URI of the data.

When the type of the data is non-file data, the content definition of the data may include text content of the data. In other words, when the content definition of the data is the plain-text content, the application may directly send the content of the data to the another application.

It should be noted that Table 1 shows only an example of standard type definitions and standard content definitions of some data. Standard type definitions and standard content definitions of a large amount of other data may be further included. This is not limited in this application.

Optionally, before an application A sends redefined shared data to a sharing path, a unified management protocol for the shared data further needs to be generated, where the unified management protocol for the shared data describes the sharing path for the shared data.

The application A may obtain the unified management protocol standard from the unified data management framework, and generate the unified management protocol for the shared data based on the unified management protocol standard. The unified management protocol standard may include a preset field.

For example, the unified management protocol standard may be as follows: udmf://intension/bundleName/groupName/guid.

The "udmf" field may be a protocol name, namely, an abbreviation of the unified data management framework.

The "intension" field may be a name of a sharing path. When the shared data is determined by a non-user operation, that is, is automatically determined by an application, content of the "intension" field may be a name of a cross-application automatic channel or a cross-device automatic path. For example, the name of the cross-application automatic channel may be automatic 1, and the name of the cross-device automatic path may be automatic2. When the shared data is determined by a user operation, content of the "intension" field may be any one of a name of a drag path, a name of a clipboard path, a name of a cross-application manual path, and a name of a cross-device manual path. For example, the name of the drag path may be drag, the name of the clipboard path may be clipboard, the name of the cross-application manual path may be manual1, and the name of the cross-device manual path may be manual2.

It should be noted that the "intension" field may further include names of more other sharing paths. The names of the foregoing sharing paths are merely used to explain this application. This is not limited in this application.

It should be noted that a name of a drag path and a name of a clipboard path between two applications on a same device may be the same as or different from a name of a drag path and a name of a clipboard path between two applications on different devices.

The "bundleName" field may be a data source service name, for example, an application name.

The "groupName" field may be a group name. An application can share a plurality of pieces of data at a time, and the plurality of pieces of data belong to one group. Group names of different groups are different.

The "guid" field may be a data ID generated by a system. Each piece of data has a unique data ID for identifying different data in a same group.

The unified management protocol standard may further include another field or another format. This is not limited in this application.

The application A may generate the unified management protocol for the shared data based on the unified management protocol standard. The application A may further generate a use description of the shared data based on the specified data definition standard. The application A sends the unified management protocol for the shared data and the use description of the shared data to the unified data management framework. The unified data management framework may bind the unified management protocol for the shared data and the use description of the shared data for storage. For example, the unified management protocol for the shared data and the use description of the shared data may be stored in a key-value format, and the unified data management framework may obtain the use description of the shared data based on the unified management protocol for the shared data.

Optionally, the use description of the shared data may alternatively be generated by the application A based on the specified data definition standard. That is, a plurality of fields in the use description of the shared data are limited in the specified data definition standard.

The use description of the shared data may include a plurality of fields, for example, a permission field, a source app field, a source os field, and a data type field.

The "permission" field may be a personalized permission description of data. The personalized permission of the data may include public permission, system permission, and application permission.

The public permission may mean that the data is data without permission, and any application, any device, and any operating system can use the data with the public permission. An identifier of the public permission may be public.

The system permission may mean that a device installed with a fixed system can use the data. The fixed system may include but is not limited to: HarmonyOS^{®}, Android^{®}, iOS^{®}, Windows^{®}, Linux^{®}, and the like. An identifier of the system permission may be HarmonyOS^{®}, Android^{®}, iOS^{®}, Windows^{®}, or Linux^{®}.

The application permission may mean that a target application on a device can use the data. An identifier of the application permission may be a name of the target application.

The source app field describes an application from which the shared data comes, and the source app field may include an application identifier of the application from which the shared data comes. For example, when the data is application-defined, for example, when the data is an application-defined graph, the application A may fill, in the source app field, an application identifier of an application from which the application-defined data is sourced.

The source os field describes an operating system from which the shared data comes, and the source os field may include an operating system identifier of the operating system from which the shared data comes. For example, when the data is system-defined, for example, when the data is the desktop icon control, the data card, or the high-performance bitmap, the application A may fill, in the source os field, an identifier of an operating system installed on an electronic device on which the application A is installed.

For example, when the data is basic data such as the text data and the file data, the application A may also fill an application identifier of a source application in the source app field and fill an operating system identifier of a source operating system in the source os field.

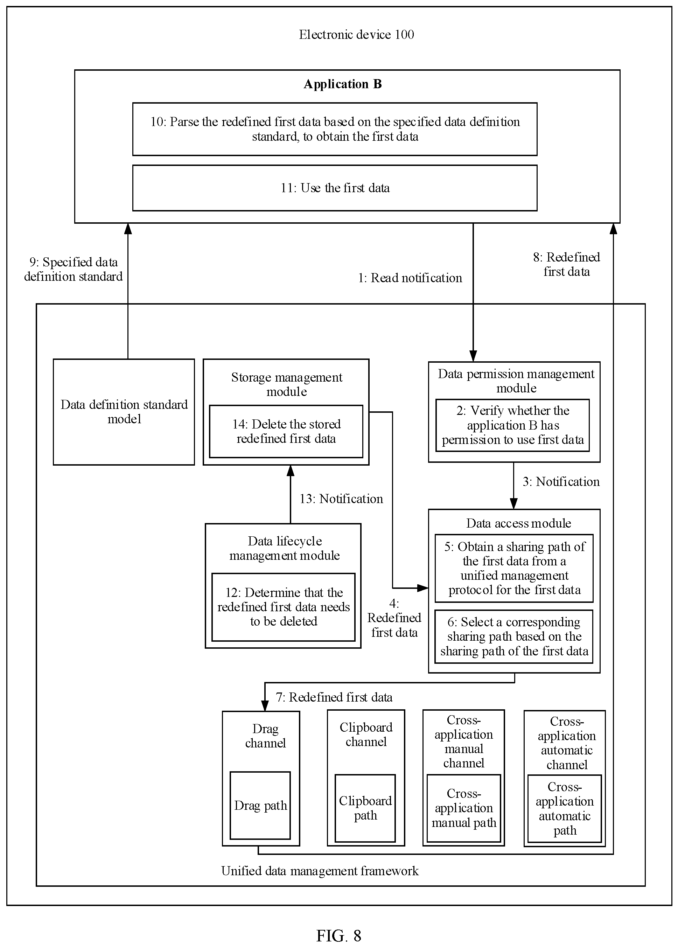

The source app field and the source os field are used for the unified data management framework to determine whether an application B is capable of accessing the data. For a specific determining rule, refer to descriptions of step 2 in FIG. 8. Details are not described herein again in this application.

The data type field describes the type of the shared data. For example, when the shared data is an image, the data type field may include a type of the image: "file.image".

Optionally, the plurality of fields in the use description of the shared data may further include a life field, and the life field is a field for describing a lifecycle of the data.

Optionally, in another embodiment, one or more fields in the use description of the shared data may also be combined in the unified management protocol for the shared data, and the unified management protocol for the shared data describes the personalized permission of the shared data, the application from which the shared data comes, the operating system from which the shared data comes, and the type of the shared data. This is not limited in this application either.

Different applications on the device can set different personalized permission for different data in the applications. In addition, the personalized permission of the shared data may be described based on the "permission" field.

For example, the personalized permission of the data such as the plain-text data, the formatted text data, the rich text data, the link data, the image data, the video data, the audio data, the document data, the presentation file data, the table data, and the portable file format data may be set to the public permission.

The personalized permission of the system-defined data such as the application project data, the window data, and the high-performance bitmap data may be set to the system permission.

The personalized permission of the application-defined data may be set to the application permission.

For example, before first data in an application A on an electronic device 100 is shared to an application B on an electronic device 200 or an application B on the electronic device 100, the application A needs to define the first data based on the specified data definition standard, to obtain redefined first data. The application A further needs to generate a unified management protocol for the first data based on a unified management protocol standard and generate a use description of the first data based on the specified data definition standard, so that a receiver can obtain a sharing path of the first data based on the unified management protocol for the first data, and the receiver can obtain personalized permission of the first data based on the use description of the first data.

For example, when the first data is an image, the redefined first data may include a type definition of the first data and a content definition of the first data. The type definition of the first data may be "image", the content definition of the first data may be "URI of the first data", and the unified management protocol for the first data may be "udmf://drag/library application/123/123456". The use description of the first data may be "HarmonyOS^{®}/library application/HarmonyOS^{®}/file.image".

For another example, when the first data is plain text, the redefined first data may include a type definition of the first data and a content definition of the first data. The type definition of the first data may be "plain-text", and the content definition of the first data may be "regular department meeting at 4:00 p.m.". A sharing protocol for the first data may be "udmf://drag/wechat application/123/123456/HarmonyOS^{®}". The use description of the first data may be "HarmonyOS^{®}/wechat application/HarmonyOS^{®}/text. plain-text".

Based on the unified management protocol for the first data, it may be obtained that the sharing path of the first data is a drag path.

Based on the use description of the first data, it can be learned that the personalized permission of the first data is that only a device installed with the HarmonyOS^{®} operating system can use the first data.

Optionally, in another embodiment, one or more fields in the use description of the first data may also be combined in the unified management protocol for the first data, and the unified management protocol for the first data describes the personalized permission of the first data, the application from which the first data comes, the operating system from which the first data comes, and the type of the first data. This is not limited in this application either.

**The following separately describes specific implementations of a scenario of data sharing between two applications on a same device and a scenario of data sharing between two applications on different devices.**

**The data sharing between the two applications on the same device is as follows (refer to** **FIG. 7** **and** **FIG. 8****).**

**For example, the two applications may be an application A on an electronic device 100 and an application B on the electronic device 100. In some embodiments, the application A may receive an operation of a user, and share first data in the application A to the application B. In another embodiment, the application A may alternatively automatically share the first data in the application A to the application B.**

**FIG. 7** **is a diagram of a specific implementation of how a unified data management framework stores the first data shared by the application A on the electronic device 100.**

**A method for storing, by the unified data management framework, the first data shared by the application A includes the following steps (step 1 to step 18).**

1: The application A obtains a unified management protocol standard and a specified data definition standard from a data definition standard model.

After being installed on the electronic device 100, the application A may obtain the unified management protocol standard and the specified data definition standard from the data definition standard model. The application A may alternatively obtain the unified management protocol standard and the specified data definition standard from the data definition standard model when the application A needs to share data. This is not limited in this application.

In some embodiments, the unified management protocol standard and the specified data definition standard may alternatively be one protocol standard.

2: The application A determines to-be-shared first data.

In some embodiments, the application A may determine the to-be-shared first data based on an operation of the user. In this case, the application A may share the data with another application on the electronic device 100 under the operation of the user.

In another embodiment, the application A may alternatively automatically determine the to-be-shared first data without the operation of the user. In this case, the application A may automatically share the data with the another application on the electronic device 100.

3: The application A defines the first data based on the specified data definition standard, to obtain redefined first data.

For descriptions of the specified data definition standard, refer to the descriptions in Table 1.

This application provides a set of data definition standards. Before an application shares data, different applications may define the shared data based on the unified data definition standard, and a receiver of the shared data may also perform parsing based on the unified data definition standard to obtain the shared data. A processing procedure of data receiving and sending is reduced.

In another embodiment, the shared data is not limited to being defined based on the unified data definition standard, and the application may also be indicated to define data in the application based on the unified data definition standard when the data in the application is generated. In this way, after the application determines the shared data, the shared data has been defined based on the unified data definition standard, and the application does not need to define the data again.

That the application A defines the first data based on the specified data definition standard may be that the application A defines an attribute of the first data based on the specified data definition standard, including but not limited to a type definition of the first data, a size definition of the first data, a creation time definition of the first data, a content definition of the first data, and the like.

For example, when the first data is non-text data (or file data), for example, an image, the redefined first data may include the type definition of the first data and the content definition of the first data. The type definition of the first data may be "image", and the content definition of the first data may be "URI of the first data".

For another example, when the first data is text data, the redefined first data may include the type definition of the first data and the content definition of the first data. The type definition of the first data may be "plain-text", and the content definition of the first data may be "regular department meeting at 4:00 p.m.".

4: The application A generates a unified management protocol for the first data and a use description of the first data.

The application A may generate the unified management protocol for the first data based on the unified management protocol standard and generate the use description of the first data based on the specified data definition standard. The unified management protocol for the first data describes a sharing path of the first data, and the use description of the first data describes personalized permission of the first data. For descriptions of the unified management protocol standard, refer to the descriptions in the embodiment in Table 1. Details are not described herein again in this application.

For example, if the sharing path of the first data is a drag path, the personalized permission of the first data is that an application on a device installed with the HarmonyOS^{®} operating system can use the first data. The unified management protocol for the first data may be "udmf://drag/library application/123/123456". The use description of the first data may be "HarmonyOS^{®}/library application/HarmonyOS^{®}/file.image".

It should be noted that step 4 may alternatively be performed before step 3, or step 4 and step 3 may be performed simultaneously. Step 1 may alternatively be performed after step 2. This is not limited in this application.

5: The application A sends the redefined first data, the unified management protocol for the first data, and the use description of the first data to a data access module.

After the application A obtains the redefined first data, the unified management protocol for the first data, and the use description of the first data, the application A sends the redefined first data, the unified management protocol for the first data, and the use description of the first data to the data access module in the unified data management framework, so that the data access module can verify the redefined first data.

6: The data access module obtains the specified data definition standard from the data definition standard model.

7: The data access module verifies the redefined first data based on the specified data definition standard, and determines that a definition of the redefined first data meets a requirement.

After the data access module obtains the redefined first data sent by the application A, the application A may obtain the specified data definition standard from the data definition standard model, and verify the redefined first data based on the specified data definition standard, to mainly verify whether the redefined first data is defined based on the unified data management framework. Only the data that passes the verification can be shared with another application through the unified data management framework, to avoid a case in which the application A does not define the first data based on the specified data definition standard.

A rule for the data access module to verify the redefined first data based on the specified data definition standard is as follows:
verify whether the redefined first data is obtained by defining the first data based on a data attribute definition and a data content definition that are defined in the specified data definition standard. For example, when the first data is image data, a type definition of the image data included in the redefined first data is "image" instead of "picture". A content definition of the image data included in the redefined first data is the URI of the image data instead of a file including the image. According to this rule, the data access module may determine that the redefined first data meets the requirement.

In another embodiment, the data access module may further verify the unified management protocol for the first data and the use description of the first data. Specifically, the data access module may obtain the unified management protocol standard from the data definition standard model, and verify the unified management protocol for the first data based on the unified management protocol standard and the use description of the first data based on the specified data definition standard.

A rule for the data access module to verify the unified management protocol for the first data based on the unified management protocol standard and the use description of the first data based on the specified data definition standard is as follows:
verify whether the unified management protocol for the first data and the use description of the first data include preset fields included in the unified management protocol standard and the specified data definition standard, verify whether content is filled in each preset field, and the like.

8: The data access module sends the redefined first data to a data security module.

When the data access module determines that the definition of the redefined first data meets the requirement, the data access module sends the redefined first data to the data security module. When the requirement is not met, the data access module may not perform step 8, step 13, and step 15, and the data access module may prompt the application A that data sharing fails. The data access module may also prompt the application A to redefine the first data based on the specified data definition standard.

9: The data security module encrypts the redefined first data to obtain encrypted redefined first data.

10: The data security module sends the encrypted redefined first data to a storage management module.

11: The storage management module stores the encrypted redefined first data.

After the data access module successfully verifies the redefined first data, or the data access module also successfully verifies the unified management protocol for the first data, the data access module may send the redefined first data to the data security module, so that the data security module encrypts the redefined first data, to ensure security of data stored in the unified data management framework.

After the data security module receives the redefined first data, the data security module may encrypt the redefined first data to obtain the encrypted redefined first data.

Then, the data security module sends the encrypted redefined first data to the storage management module.

The storage management module may store the encrypted redefined first data.

Optionally, the data access module may also store the unified management protocol for the first data and the use description of the first data in the storage management module, or store the unified management protocol for the first data and the use description of the first data in the storage management module after the data security module encrypts the unified management protocol for the first data and the use description of the first data.

Optionally, the unified data management framework may not include the data security module. After the data access module successfully verifies the redefined first data, the data access module may directly send the redefined first data to the storage management module, and the storage management module only needs to store the redefined first data.

12: The data access module sends the unified management protocol for the first data and the use description of the first data to a data permission management module.

13: The data permission management module obtains the personalized permission of the first data based on the use description of the first data.

The data access module may further send the unified management protocol for the first data and the use description of the first data to the data permission management module.

The data permission management module may obtain the personalized permission of the first data based on the use description of the first data, so that subsequently, whether an application that needs to use the first data has use permission can be verified based on the personalized permission of the first data.

Optionally, the personalized permission of the first data is described in the "permission" field in the use description of the first data. The personalized permission for the first data includes but is not limited to public permission, system permission, application permission, and the like.

The data permission management module may obtain the personalized permission of the first data from the use description of the first data.

14: The data permission management module may determine use permission of the first data based on the personalized permission of the first data, a permission rule of the sharing path of the first data, and a permission rule of the unified data management framework.

The personalized permission for the first data includes but is not limited to public permission, system permission, application permission, and the like.

The permission rule of the sharing path of the first data includes but is not limited to that a target application can use the first data.

The permission rule of the unified data management framework includes but is not limited to that all applications or some applications on the device can use the first data.

A priority of the personalized permission of the first data is higher than a priority of the permission rule of the sharing path of the first data, and the priority of the permission rule of the sharing path of the first data is higher than a priority of the permission rule of the unified data management framework.

The data permission management module may determine the use permission of the first data based on the personalized permission of the first data, the permission rule of the sharing path of the first data, and the permission rule of the unified data management framework.

The use permission of the first data may be that one or more applications on the electronic device 100 can use the first data.

Specifically, when the use description of the first data specifies that the personalized permission of the first data is not the public permission, the use permission of the first data is the personalized permission of the first data defined in the use description of the first data.

After the use description of the first data specifies that the personalized permission of the first data is the public permission, the permission rule of the sharing path of the first data is queried. It can be learned from the foregoing descriptions that a sharing path between the two applications on the same device includes but is not limited to a drag path, a clipboard path, a cross-application manual path, and a cross-application automatic path. The drag path, the clipboard path, and the cross-application manual path all restrict that the first data can be used only by the target application. For example, if the user shares the first data in the application A to the application B through the drag path, the drag path restricts that the first data can be used only by the application B. In this way, the clipboard path and the cross-application manual path are similar to the drag path. The cross-application automatic path restricts that all applications or some applications on the device can use the first data. In other words, permission of the cross-application automatic path is the public permission, and there is no use permission limitation.

When the sharing path of the first data is not the cross-application automatic path, permission specified in the sharing path of the first data is used, and the use permission of the first data is the permission specified in the sharing path of the first data.

When the sharing path of the first data is the cross-application automatic path, the permission rule of the unified data management framework is queried. The use permission of the first data is the permission rule of the unified data management framework. If the permission rule of the unified data management framework is the public permission, and there is no use permission limitation, the first data can be used by all applications on the electronic device 100. If the permission rule of the unified data management framework is that some applications can use the first data, the first data can be used by some applications on the electronic device 100.

It should be noted that the personalized permission of the first data, the permission rule of the sharing path of the first data, and the permission rule of the unified data management framework may be preset, or may be customized by the user. This is not limited in this application.

It should be noted that step 12 to step 14 may be performed before, after, or at the same time as step 8. This is not limited in this application.

15: The data access module sends the unified management protocol for the first data and the use description of the first data to a data lifecycle management module.

16: The data lifecycle management module determines a lifecycle of the first data based on a lifecycle rule of the first data, a lifecycle rule of the sharing path of the first data, and a lifecycle rule of the unified data management framework.

17: The data lifecycle management module sends a notification to the storage management module based on the lifecycle of the first data.

18: The storage management module continues to store or deletes the encrypted redefined first data.

The data lifecycle management module may determine, based on the determined lifecycle of the first data, whether the storage management module continues to store or deletes the encrypted redefined first data.

The lifecycle rule of the first data includes but is not limited to immediate deletion or permanent storage. A lifecycle in which the first data is not used is permanent storage. A lifecycle in which the first data has been used is immediate deletion.

The lifecycle rule of the sharing path of the first data includes but is not limited to periodic cleaning or permanent storage.

The permission rule of the unified data management framework includes but is not limited to periodic cleaning or permanent storage.

A priority of the lifecycle rule of the first data is higher than a priority of the lifecycle rule of the sharing path of the first data, and the priority of the lifecycle rule of the sharing path of the first data is higher than a priority of the lifecycle rule of the unified data management framework.

The data lifecycle management module may determine the lifecycle of the first data based on the lifecycle rule of the first data, the lifecycle rule of the sharing path of the first data, and the lifecycle rule of the unified data management framework.

Specifically, when the first data has been used, the lifecycle rule of the first data is immediate deletion. The data lifecycle management module may not need to query the lifecycle rule of the sharing path of the first data and the lifecycle rule of the unified data management framework. The data lifecycle management module may send a message to the storage management module, and the storage management module may delete the encrypted redefined first data.

When the first data is not used, the lifecycle rule of the first data is to continue to be stored. In this case, the data lifecycle management module may continue to query the lifecycle rule of the sharing path of the first data.

When the lifecycle rule of the sharing path of the first data is periodic cleaning, the data lifecycle management module may send a message to the storage management module when duration for storing the encrypted redefined first data reaches preset duration and the first data is not used, and the storage management module may delete the encrypted redefined first data.

Optionally, different sharing paths have different periodic clearing rules, or may have a same periodic clearing rule. For example, preset duration of the drag path is one hour, and preset duration of the clipboard path is two hours.

Optionally, lifecycle rules of different sharing paths are different or may be the same. For example, the lifecycle rule of the drag path includes but is not limited to periodic cleaning or permanent storage, and the lifecycle rule of the clipboard path includes but is not limited to one or more of overwrite-on-write, periodic cleaning, or permanent storage.

When the lifecycle rule of the sharing path of the first data is permanent storage, the data lifecycle management module may continue to query the lifecycle rule of the unified data management framework.

When the lifecycle rule of the unified data management framework is permanent storage, the storage management module may continue to store the encrypted redefined first data. When the lifecycle rule of the unified data management framework is periodic cleaning, the data lifecycle management module may send a message to the storage management module when the duration for storing the encrypted redefined first data reaches the preset duration and the first data is not used, and the storage management module may delete the encrypted redefined first data.

It should be noted that the lifecycle rule of the first data, the lifecycle rule of the sharing path of the first data, and the lifecycle rule of the unified data management framework may be preset, or may be customized by the user. This is not limited in this application.

It should be noted that step 15 to step 18 may be performed before, after, or at the same time as step 8. This is not limited in this application.

Through the data lifecycle management module, data stored in the storage management module can be managed. Data that has been used can be periodically cleared to release memory. In addition, data that has not been used for a long time can be deleted in time to ensure data security and avoid data leakage.

The steps in FIG. 7 are merely used to describe the specific implementation of how the unified data management framework stores the first data shared by the application A, but should not limit execution steps of the steps.

**FIG. 8** **is a diagram of a specific implementation of how the application B on the electronic device 100 reads, from the unified data management framework, the first data shared by the application A.**

**For example, after the application A on the electronic device 100 stores the to-be-shared first data in the storage management module of the unified data management framework, the application B on the electronic device 100 may obtain the first data from the storage management module of the unified data management framework, to implement data sharing between the two applications on the same device.**

**A method for reading, by the application B from the unified data management framework, the first data shared by the application A includes the following steps (step 1 to step 11).**

1: The application B sends a read notification to the data permission management module.

The read notification is used to read, from the unified data management framework, the first data shared by the application A.

Optionally, the read notification may carry an application identifier of the application B, so that the data permission management module verifies whether the application B has permission to access the first data shared by the application A.

2: The data permission management module verifies whether the application B has permission to use the first data.

When the application B has permission to use the first data, step 4 is performed.

When the application B has no permission to use the first data, the procedure ends.

It can be learned from step 14 in the embodiment in FIG. 7 that the data permission management module may determine the use permission of the first data based on the personalized permission of the first data, the permission rule of the sharing path of the first data, and the permission rule of the unified data management framework. Specifically, refer to the descriptions of step 14 in the embodiment in FIG. 7.

First, the data permission management module may determine, based on the use description of the first data, whether the application B is capable of using the first data. When the application B is capable of using the first data, whether the application B has permission to use the first data is determined based on the use permission of the first data. When the application B has permission to use the first data, the data permission management module sends a notification to the data access module, where the notification indicates the data access module to send the redefined first data to the application B.

That the data permission management module determines whether the application B is capable of using the first data specifically includes:
The data permission management module obtains a type of the first data from the use description of the first data. The type of the first data includes but is not limited to a basic type, a system-defined type, and an application-defined type.

Then, the data permission management module obtains an application source or an operating system source of the first data based on the type of the first data.

When the data permission management module is the basic type, it indicates that the first data can be used by any operating system, any application, and any device. In this case, the data permission management module does not need to determine the application source or the operating system source of the first data, and directly determines, based on the use permission of the first data, whether the application B has permission to use the first data.

When the data permission management module is the system-defined type, the data permission management module obtains the operating system source of the first data, and only an application on a device on which an operating system that is the same as the operating system source is installed can use the first data. For example, the operating system source is HarmonyOS^{®}. If the HarmonyOS^{®} operating system is also installed on the device on which the application B is installed, the application B is capable of using the first data, and the data permission management module then determines, based on the use permission of the first data, whether the application B has permission to use the first data. If the HarmonyOS^{®} operating system is not installed on the device on which the application B is installed, the application B is incapable of using the first data. The data permission management module does not need to determine, based on the use permission of the first data, whether the application B has permission to use the first data, and determines that the application B cannot use the first data.

When the data permission management module is the application-defined type, the data permission management module obtains the application source of the first data, and only an application that has a same application source as the application source can use the first data. When the application B and the application source are the same or the application B and the application source are family applications, the application B is capable of using the first data, and the data permission management module determines, based on the use permission of the first data, whether the application B has permission to use the first data. If the application B and the application source are different or the application B and the application source are not family applications, the application B is incapable of using the first data. The data permission management module does not need to determine, based on the use permission of the first data, whether the application B has permission to use the first data, and determines that the application B cannot use the first data.

When the application B is capable of using the first data, whether the application B has permission to use the first data is determined based on the use permission of the first data. The use permission of the first data includes: One or more applications can use the first data. When the one or more applications include the application B, it indicates that the application B has permission to use the first data.

For example, when the use permission of the first data is the public permission, the application B has permission to use the first data.

When the use permission of the first data is channel permission (to be specific, the target application sent through a sharing channel has permission to use the first data), when the application B is the target application, the application B has permission to use the first data, or when the application B is not the target application, the application B has no permission to use the first data.

3: The data permission management module sends a notification to the data access module.

The notification indicates the data access module to select a corresponding sharing path to send the first data to the application B.

Optionally, the notification may include an identifier of the application B, so that after determining the sharing path, the data access module may send the redefined first data based on the identifier of the application B to the application B through the corresponding sharing path.

4: The data access module obtains the redefined first data from the storage management module.

Optionally, after receiving a first notification sent by the data permission management module, the data access module may obtain the redefined first data from the storage management module.

5: The data access module obtains the sharing path of the first data from the unified management protocol for the first data.

6: The data access module selects a corresponding sharing path based on the sharing path of the first data.

Optionally, the data access module may obtain the unified management protocol for the first data from the storage management module.

Optionally, after receiving the first notification sent by the data permission management module, the data access module may obtain the unified management protocol for the first data from the storage management module.

Optionally, the unified management protocol for the first data includes an "intension" field, and the "intension" field is used to fill a name of the sharing path. Therefore, the data access module obtains the sharing path of the first data from the unified management protocol for the first data.

Specifically, when the name of the sharing path filled in the "intension" field is automatic1, the sharing path of the first data may be a cross-application automatic path.

When the name of the sharing path filled in the "intension" field is clipboard, the sharing path of the first data may be a clipboard path.

When the name of the sharing path filled in the "intension" field is drag, the sharing path of the first data may be a drag path.

When the name of the sharing path filled in the "intension" field is manual1, the sharing path of the first data may be a cross-application manual path.

After the data access module obtains the sharing path of the first data from the unified management protocol for the first data, the data access module may select the corresponding sharing path based on the sharing path of the first data, and send the first data to the target application through the corresponding sharing path.

Optionally, step 4 may be performed before, after, or at the same time as step 5 and step 6. This is not limited in this application. Step 4 needs to be performed only before step 7.

For example, the sharing path of the first data obtained by the data access module from the unified management protocol for the first data may be the drag path. In this case, the data access module can select the drag path.

7: The data access module sends the redefined first data to the drag path in a drag channel.

For example, after the data access module selects the drag path, the data access module may send the redefined first data to the drag path in the drag channel.

Optionally, the data access module may further send the identifier of the application B to the drag channel, so that the drag channel may send the redefined first data based on the identifier of the application B to the application B.

8: The drag path sends the redefined first data to the application B.

After the drag path receives the identifier of the application B and the redefined first data that are sent by the data access module, the drag path may send the redefined first data to the application B based on the identifier of the application B.

9: The application B obtains the specified data definition standard from the data definition standard model.

10: The application B parses the redefined first data based on the specified data definition standard, to obtain the first data.

11: The application B uses the first data.

After the application B obtains the redefined first data sent by the drag path, the application B may obtain the specified data definition standard from the data definition standard model.

In other words, regardless of the drag path, the cross-application manual path, or the cross-application automatic path, the application B needs to obtain only one data definition standard, namely, the specified data definition standard, and parses the redefined first data based on the specified data definition standard, to obtain the first data. The application B can use the first data. In this way, data sharing between the two applications on the same device is implemented.

That the application B can use the first data specifically includes: When the first data is text data, the application B on the electronic device 100 may directly obtain text content of the first data from the first data, and use the text content of the first data.

When the first data is non-text data (or referred to as file data), when the application B on the electronic device 100 needs to use the first data, the application B on the electronic device 100 may obtain the URI of the first data from the first data, obtain the file data of the first data based on the URI of the first data, and use the file data of the first data.

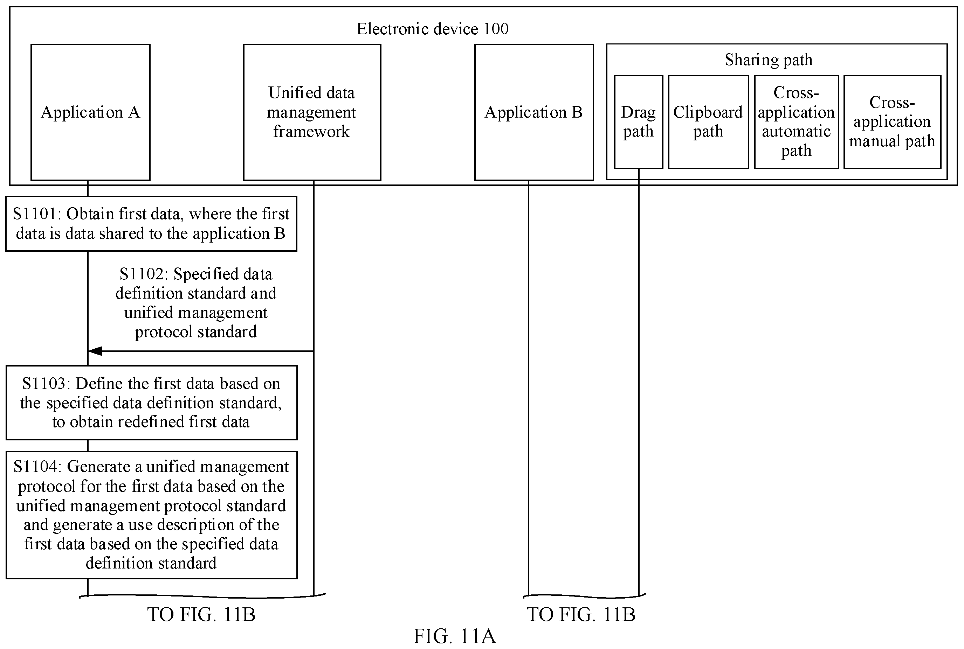

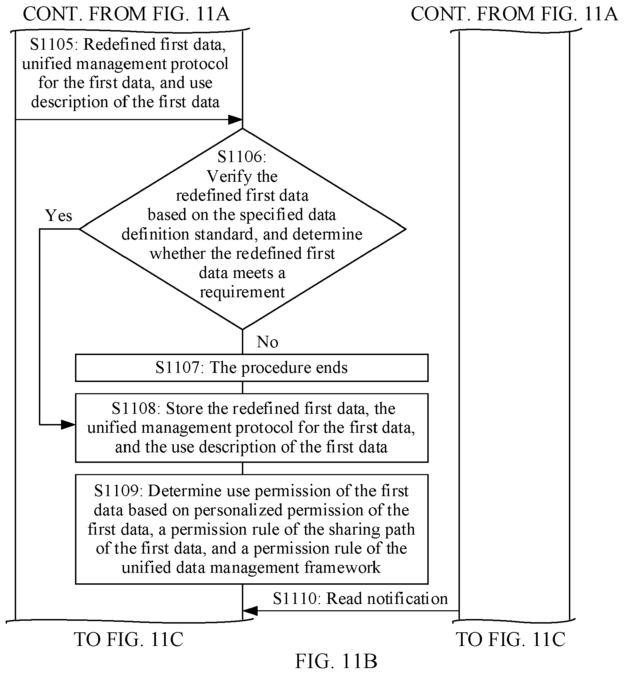

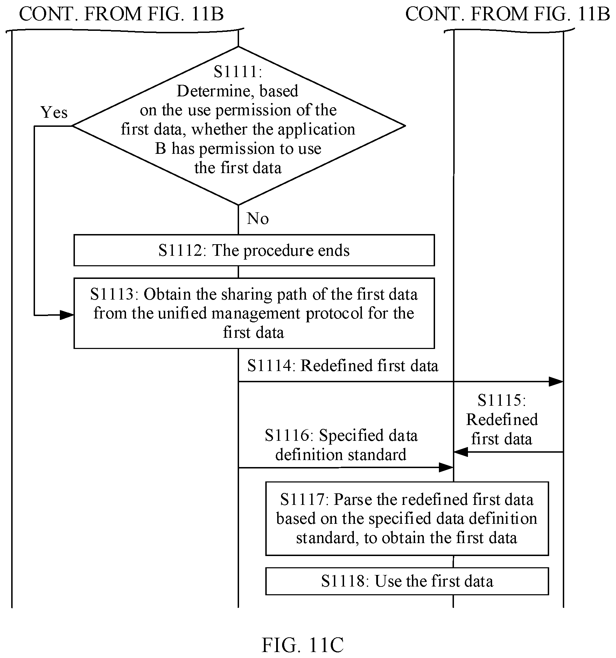

Based on the method for sharing data between two applications on a same device provided in the embodiment in FIG. 11A to FIG. 11C, different applications need to define shared data based on this standard before data sharing is performed. After the shared data is received, the different applications also need to perform parsing based on this standard to obtain the shared data. In other words, for different applications and different sharing paths, data definition standards are unified. This implements format unification of the shared data.

12: The data lifecycle management module determines that the redefined first data needs to be deleted.

13: The data lifecycle management module sends a notification to the storage management module.

14: The storage management module deletes the stored redefined first data.

Optionally, after the application B uses the first data, the data lifecycle management module may determine to delete the used redefined first data in time, to avoid data leakage.

Specifically, after the application B uses the first data, the data lifecycle management module may send a notification to the storage management module. After receiving the notification, the storage management module may delete the stored redefined first data in response to the notification. In this way, the storage management module may delete the used redefined first data in time. Data leakage can be avoided, and in addition, memory occupied by the used redefined first data can be released in time.

It should be noted that the steps in FIG. 8 are merely used to describe the specific implementation of how the application B reads the first data from the unified data management framework, but should not limit execution steps of the steps.

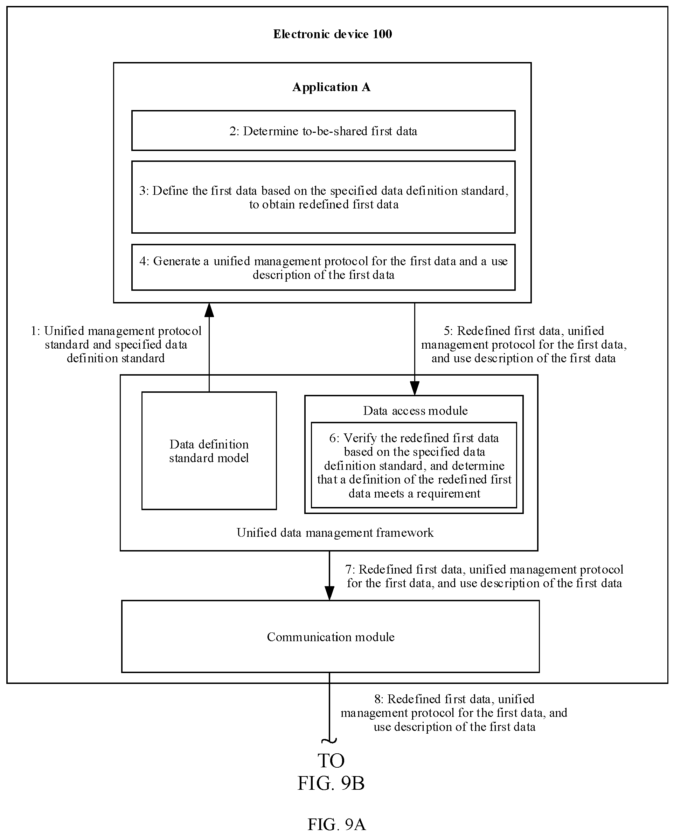

**The data sharing between the two applications on the different devices is as follows (refer to** **FIG. 9A to FIG. 10****).**

**For example, the different devices may be an electronic device 100 and an electronic device 200, and the two applications may be respectively an application A on the electronic device 100 and an application B on the electronic device 200. In some embodiments, the application A on the electronic device 100 may receive an operation of a user, and share first data in the application A to the application B on the electronic device 200. In another embodiment, the application A on the electronic device 100 may alternatively automatically share the first data in the application A to the application B on the electronic device 200.**

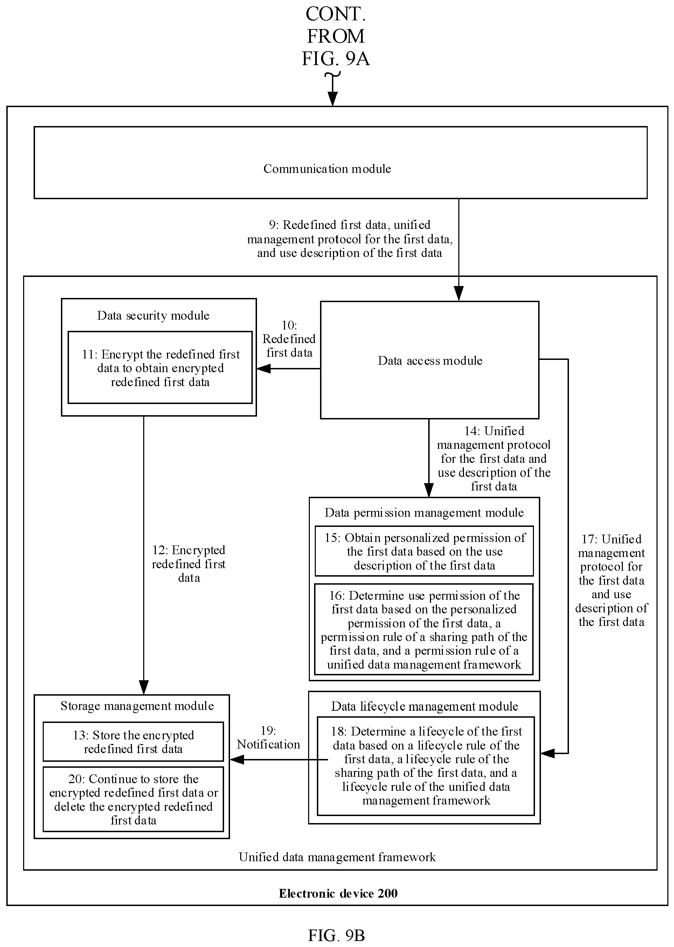

**FIG. 9A** **and** **FIG. 9B** **are a diagram of a specific implementation of how a unified data management framework on the electronic device 200 stores the first data shared by the application A on the electronic device 100.**

A method for storing, by the unified data management framework on the electronic device 200, the first data shared by the application A includes the following steps (step 1 to step 20).

The electronic device 100 sends the first data in the application A to the electronic device 200 (step 1 to step 8).

For descriptions of step 1 to step 6, refer to the descriptions of step 1 to step 6 in the embodiment in FIG. 7. Details are not described herein again in this application.

Optionally, the electronic device 100 may not perform step 5 and step 6, and step 5 and step 6 may be performed by the electronic device 200. This is not limited in this application.

7. The unified data management framework on the electronic device 100 sends the redefined first data, the unified management protocol for the first data, and the use description of the first data to a communication module on the electronic device 100.

8. The communication module on the electronic device 100 is configured to send the redefined first data, the unified management protocol for the first data, and the use description of the first data to a communication module on the electronic device 200.

In this way, cross-device data sharing can be implemented.

9. The communication module on the electronic device 200 sends the redefined first data, the unified management protocol for the first data, and the use description of the first data to a data access module in a unified data management framework on the electronic device 200.

10. The data access module on the electronic device 200 sends the redefined first data to a data security module on the electronic device 200.

11. The data security module on the electronic device 200 encrypts the redefined first data to obtain encrypted redefined first data.

12. The data security module on the electronic device 200 sends the encrypted redefined first data to a storage management module on the electronic device 200.

13. The storage management module on the electronic device 200 stores the encrypted redefined first data.

After the data security module on the electronic device 200 receives the redefined first data, the data security module on the electronic device 200 may encrypt the redefined first data to obtain the encrypted redefined first data.

Then, the data security module on the electronic device 200 sends the encrypted redefined first data to the storage management module.

The storage management module on the electronic device 200 may store the encrypted redefined first data.

Optionally, the data access module on the electronic device 200 may store the unified management protocol for the first data and the use description of the first data in the storage management module on the electronic device 200, or store the unified management protocol for the first data and the use description of the first data in the storage management module on the electronic device 200 after the data access module on the electronic device 200 encrypts the unified management protocol for the first data and the use description of the first data.

Optionally, the unified data management framework on the electronic device 200 may not include the data security module on the electronic device 200. After the data access module on the electronic device 200 successfully verifies the redefined first data, the data access module on the electronic device 200 may directly send the redefined first data to the storage management module on the electronic device 200, and the storage management module on the electronic device 200 only needs to store the redefined first data.

14. The data access module on the electronic device 200 sends the unified management protocol for the first data and the use description of the first data to a data permission management module on the electronic device 200.

15. The data permission management module on the electronic device 200 obtains personalized permission of the first data based on the use description of the first data.

The data access module on the electronic device 200 may further send the use description of the first data to the data permission management module on the electronic device 200.

The data permission management module on the electronic device 200 may obtain the personalized permission of the first data based on the use description of the first data, so that subsequently, whether an application that needs to use the first data has use permission can be verified based on the personalized permission of the first data.

Optionally, the personalized permission of the first data is described in the "permission" field in the use description of the first data. The personalized permission for the first data includes but is not limited to public permission, system permission, application permission, and the like.

The data permission management module on the electronic device 200 may obtain the personalized permission of the first data from the use description of the first data.

16. The data permission management module on the electronic device 200 may determine use permission of the first data based on the personalized permission of the first data, a permission rule of the sharing path of the first data, and a permission rule of the unified data management framework.

Step 16 is similar to step 14 in the embodiment in FIG. 7, and a difference lies in that the use permission of the first data obtained in step 14 in the embodiment in FIG. 7 may be that one or more applications on the electronic device 100 can use the first data.

The use permission of the first data obtained in step 16 in the embodiment in FIG. 9A and FIG. 9B may be that one or more applications on the electronic device 200 can use the first data.

For detailed descriptions of step 16, refer to the descriptions of step 14 in the embodiment in FIG. 7. Details are not described herein again in this application.

17. The data access module on the electronic device 200 sends the unified management protocol for the first data and the use description of the first data to a data lifecycle management module on the electronic device 200.

18. The data lifecycle management module on the electronic device 200 determines a lifecycle of the first data based on a lifecycle rule of the first data, a lifecycle rule of the sharing path of the first data, and a lifecycle rule of the unified data management framework on the electronic device 200.

19. The data lifecycle management module on the electronic device 200 sends a notification to the storage management module on the electronic device 200 based on the lifecycle of the first data.

20. The storage management module on the electronic device 200 continues to store or deletes the encrypted redefined first data.

The data lifecycle management module on the electronic device 200 may determine, based on the determined lifecycle of the first data, whether the storage management module continues to store or deletes the encrypted redefined first data.

The detailed descriptions of step 16 to step 20 are similar to implementations of step 15 to step 18 in the embodiment in FIG. 7. For details, refer to the descriptions of step 15 to step 18 in the embodiment in FIG. 7. Details are not described herein again in this application.

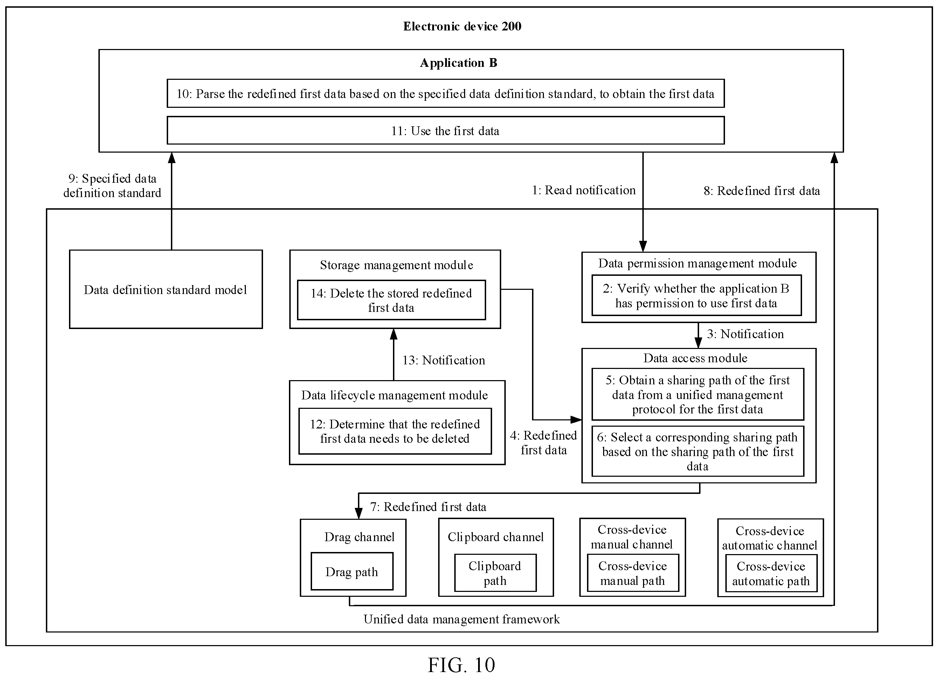

**FIG. 10** **is a diagram of a specific implementation of how the application B on the electronic device 200 reads, from the unified data management framework on the electronic device 200, the first data shared by the application A on the electronic device 100.**

**For example, after the application A on the electronic device 100 stores the to-be-shared first data in the storage management module of the unified data management framework on the electronic device 200, the application B on the electronic device 200 may obtain the first data from the storage management module of the unified data management framework on the electronic device 200, to implement data sharing between the two applications on the different devices.**

**A method for reading, by the application B on the electronic device 200 from the unified data management framework on the electronic device 200, the first data shared by the application A on the electronic device 100 includes the following steps (step 1 to step 14).**
1: The application B on the electronic device 200 sends a read notification to the data permission management module on the electronic device 200.
2: The data permission management module on the electronic device 200 verifies whether the application B has permission to use the first data.
3: The data permission management module on the electronic device 200 sends a notification to the data access module on the electronic device 200.
4: The data access module on the electronic device 200 obtains the redefined first data from the storage management module on the electronic device 200.
5: The data access module on the electronic device 200 obtains the sharing path of the first data from the unified management protocol for the first data.
6: The data access module on the electronic device 200 selects a corresponding sharing path based on the sharing path of the first data.
   For descriptions of step 1 to step 6 in the embodiment in FIG. 10, refer to the descriptions of step 1 to step 6 in the embodiment in FIG. 8. A difference lies in that step 1 to step 6 in the embodiment in FIG. 10 are a specific implementation of how the application B on the electronic device 200 reads the first data from the unified data management framework on the electronic device 200, and step 1 to step 6 in the embodiment in FIG. 8 are a specific implementation of how the application B on the electronic device 100 reads the first data from the unified data management framework on the electronic device 100. Principles are similar, and details are not described herein in this application.
7: The data access module on the electronic device 200 sends the redefined first data to a drag path in a drag channel on the electronic device 200.
   For example, after the data access module on the electronic device 200 selects the drag path on the electronic device 200, the data access module on the electronic device 200 may send the redefined first data to the drag path in the drag channel on the electronic device 200.
   Optionally, the data access module on the electronic device 200 may further send an identifier of the application B to the drag channel on the electronic device 200, so that the drag channel on the electronic device 200 may send the redefined first data based on the identifier of the application B to the application B.
8: The drag path on the electronic device 200 sends the redefined first data to the application B.
   After the drag path on the electronic device 200 receives the identifier of the application B and the redefined first data that are sent by the data access module on the electronic device 200, the drag path on the electronic device 200 may send the redefined first data to the application B based on the identifier of the application B.
9: The application B on the electronic device 200 obtains the specified data definition standard from a data definition standard model on the electronic device 200.
10: The application B on the electronic device 200 parses the redefined first data based on the specified data definition standard, to obtain the first data.
11: The application B on the electronic device 200 uses the first data.

After the application B on the electronic device 200 obtains the redefined first data sent by the drag path on the electronic device 200, the application B on the electronic device 200 may obtain the specified data definition standard from the data definition standard model.

In other words, regardless of the drag path, a clipboard path, a cross-device manual path, or a cross-device automatic path, the application B on the electronic device 200 needs to obtain only one data definition standard, namely, the specified data definition standard, and parses the redefined first data based on the specified data definition standard, to obtain the first data. The application B on the electronic device 200 can use the first data. In this way, data sharing between the two applications on the different devices is implemented.

That the application B on the electronic device 200 can use the first data specifically includes:
When the first data is text data, the application B on the electronic device 200 may directly obtain text content of the first data from the first data, and use the text content of the first data.

When the first data is non-text data (or referred to as file data), when the application B on the electronic device 200 needs to use the first data, the application B on the electronic device 200 may obtain the URI of the first data from the first data, and obtain the file data of the first data based on the URI of the first data. Specifically, the application B on the electronic device 200 may send the URI of the first data to the communication module on the electronic device 100 through the communication module. After the communication module on the electronic device 100 receives an obtaining notification, the communication module on the electronic device 100 may obtain the file data of the first data based on the URI of the first data, and then the communication module on the electronic device 100 sends the file data of the first data to the communication module on the electronic device 200. Then, the communication module on the electronic device 200 sends the file data of the first data to the application B on the electronic device 200, and the application B on the electronic device 200 can use the file data of the first data.

12: The data lifecycle management module on the electronic device 200 determines that the redefined first data needs to be deleted.

13: The data lifecycle management module on the electronic device 200 sends a notification to the storage management module on the electronic device 200.

14: The storage management module on the electronic device 200 deletes the stored redefined first data.

Optionally, after the application B on the electronic device 200 uses the first data, the data lifecycle management module on the electronic device 200 may determine to delete the used redefined first data in time, to avoid data leakage.

Specifically, after the application B on the electronic device 200 uses the first data, the data lifecycle management module on the electronic device 200 may send a notification to the storage management module on the electronic device 200. After receiving the notification, the storage management module on the electronic device 200 may delete the stored redefined first data in response to the notification. In this way, the storage management module on the electronic device 200 may delete the used redefined first data in time. Data leakage can be avoided, and in addition, memory occupied by the used redefined first data can be released in time.

It should be noted that the steps in FIG. 10 are merely used to describe the specific implementation of how the application B on the electronic device 200 reads the first data from the unified data management framework, but should not limit execution steps of the steps.

FIG. 11A to FIG. 11C are a diagram of a method of how an application A on an electronic device 100 shares data to an application B on an electronic device 100 according to an embodiment of this application.

S1101: The application A obtains first data, where the first data is data shared to the application B.

In some embodiments, the application A may receive an operation of a user, and share the first data in the application A to the application B. For example, the first data in the application A may be shared to the application B through the drag path in the same device, the clipboard path in the same device, and the cross-application path in the same device shown in FIG. 1A to FIG. 1J.

In another embodiment, the application A may alternatively automatically share the first data in the application A to the application B. For example, the first data in the application A may be shared to the application B through a cross-application automatic path.

Alternatively, the first data in the application A may be shared to the application B through another sharing path. This is not limited in this application.

S1102: The application A obtains a specified data definition standard and a unified management protocol standard from a unified data management framework.

Optionally, S1102 may be performed before S1101. This is not limited in this application.

For descriptions of the specified data definition standard and the unified management protocol standard, refer to the descriptions in Table 1. Details are not described herein again in this application.

It should be noted that different sharing paths on the electronic device 100 need to adapt to the specified data definition standard and the unified management protocol standard. When an application on the electronic device 100 shares data through different sharing paths, the data only needs to be defined based on this standard. When using the shared data, another application on the electronic device 100 only needs to parse redefined data based on this standard to obtain the shared data. Definition standards of shared data by different paths are unified.

S1103: The application A defines the first data based on the specified data definition standard, to obtain redefined first data.

This application provides a set of data definition standards (the specified data definition standard). Before an application shares data, different applications may define the shared data based on the specified data definition standard, and a receiver of the shared data may also perform parsing based on the specified data definition standard to obtain the shared data. A processing procedure of data receiving and sending is reduced.

In another embodiment, the shared data is not limited to being defined based on the specified data definition standard, and the application may also be indicated to define data in the application based on the specified data definition standard when the data in the application is generated. In this way, after the application determines the shared data, the shared data has been defined based on the specified data definition standard, and the application does not need to define the data again.

That the application A defines the first data based on the specified data definition standard may be that the application A defines an attribute of the first data based on the specified data definition standard, including but not limited to a type definition of the first data, a size definition of the first data, a creation time definition of the first data, a content definition of the first data, and the like.

For example, when the first data is non-text data (or file data), for example, an image, the redefined first data may include a type definition of the first data and a content definition of the first data. The type definition of the first data may be "image", and the content definition of the first data may be "URI of the first data".

For another example, when the first data is text data, the redefined first data may include a type definition of the first data and a content definition of the first data. The type definition of the first data may be "plain-text", and the content definition of the first data may be "regular department meeting at 4:00 p.m.".

S1104: The application A generates a unified management protocol for the first data based on the unified management protocol standard and generates a use description of the first data based on the specified data definition standard.

The application A may generate the unified management protocol for the first data based on the unified management protocol standard and generate the use description of the first data based on the specified data definition standard. The unified management protocol for the first data describes a sharing path of the first data, and the use description of the first data describes personalized permission of the first data.

For example, if the sharing path of the first data is the drag path, personalized permission of the first data is that an application on a device installed with the HarmonyOS^{®} operating system can use the first data. The unified management protocol for the first data may be "udmf://drag/library application/123/123456". The use description of the first data may be "HarmonyOS^{®}/wechat application/HarmonyOS^{®}/text. plain-text".

It should be noted that S1104 may be performed before S1103, or S1104 and S1103 may be simultaneously performed. This is not limited in this application.

S1105: The application A sends the redefined first data, the unified management protocol for the first data, and the use description of the first data to the unified data management framework.

After the application A obtains the redefined first data, the unified management protocol for the first data, and the use description of the first data, the application A sends the redefined first data, the unified management protocol for the first data, and the use description of the first data to the unified data management framework, so that the unified data management framework may verify the redefined first data, or verify the redefined first data, the unified management protocol for the first data, and the use description of the first data.

S1106: The unified data management framework verifies the redefined first data based on the specified data definition standard, and determines whether a definition of the redefined first data meets a requirement.

If the definition of the redefined first data does not meet the requirement, S1107 is performed.

If the definition of the redefined first data meets a requirement, S1108 is performed.

The unified data management framework verifies the redefined first data, mainly verifying whether the redefined first data is defined based on the unified data management framework. Only the data that passes the verification can be shared with another application through the unified data management framework, to avoid a case in which the application A does not define the first data based on the specified data definition standard.

A rule for the unified data management framework to verify the redefined first data based on the specified data definition standard is as follows:
verify whether the redefined first data is obtained by defining the first data based on a data attribute definition and a data content definition that are defined in the specified data definition standard. For example, when the first data is image data, a type definition of the image data included in the redefined first data is "image" instead of "picture". A content definition of the image data included in the redefined first data is the URI of the image data instead of a file including the image. A content definition of text data included in the redefined first data is plain-text content of the text data, instead of including other content. According to this rule, the unified data management framework may determine that the defined first data meets the requirement.

Optionally, the unified data management framework may alternatively verify the unified management protocol for the first data based on the unified management protocol standard and the use description of the first data based on the specified data definition standard, and determine whether the unified management protocol for the first data and the use description of the first data meet requirements.

A rule for the unified data management framework to verify the unified management protocol for the first data based on the unified management protocol standard and verify the use description of the first data based on the specified data definition standard is as follows:
verify whether the unified management protocol for the first data and the use description of the first data include preset fields included in the unified management protocol standard and the specified data definition standard, verify whether content is filled in each preset field, and the like.

The foregoing verification rule may alternatively be in another manner. This is not limited in this application.

S1107: The procedure ends.

When it is determined that the definition of the redefined first data does not meet the requirement, it indicates that sharing of the first data cannot continue, and the procedure ends.

Optionally, the unified data management framework may also send a notification to the application A, and the application A may prompt that the requirement of the unified data management framework is not met and sharing cannot be performed.

S1108: The unified data management framework stores the redefined first data, the unified management protocol for the first data, and the use description of the first data.

Optionally, to ensure security of the redefined first data, the unified management protocol for the first data, and the use description of the first data, the redefined first data, the unified management protocol for the first data, and the use description of the first data may be encrypted for storage.

Optionally, the unified data management framework may also manage the stored redefined first data, the unified management protocol for the first data, and the use description of the first data, for example, continue to store the redefined first data, the unified management protocol for the first data, and the use description of the first data, or delete the redefined first data, the unified management protocol for the first data, and the use description of the first data. Specifically, refer to the descriptions of step 18 in the embodiment in FIG. 7. Details are not described herein again in this application.

S1109: The unified data management framework determines use permission of the first data based on the personalized permission of the first data, a permission rule of the sharing path of the first data, and a permission rule of the unified data management framework.

The use permission of the first data may be that one or more applications on the electronic device 100 can use the first data.

The personalized permission of the first data and the permission rule of the sharing path of the first data may be determined by the unified data management framework based on the unified management protocol for the first data and the use description of the first data.

Optionally, the personalized permission of the first data is described in a "permission" field in the use description of the first data. The personalized permission for the first data includes but is not limited to public permission, system permission, application permission, and the like. The unified data management framework may obtain the personalized permission of the first data from the unified management protocol for the first data.

Optionally, an "intension" field in the unified management protocol for the first data describes the sharing path of the first data. The unified data management framework may obtain permission rules of different sharing paths, then obtain the sharing path of the first data from the "intension" field, and determine the permission rule of the sharing path of the first data from the permission rules of the plurality of different sharing paths.

The permission rule of the unified data management framework may be preset by the unified data management framework, and the unified data management framework may obtain the permission rule of the unified data management framework.

The unified data management framework may determine the use permission of the first data based on the personalized permission of the first data, the permission rule of the sharing path of the first data, and the permission rule of the unified data management framework.

The personalized permission for the first data includes but is not limited to public permission, system permission, application permission, and the like.

The permission rule of the sharing path of the first data includes but is not limited to that a target application can use the first data.

The permission rule of the unified data management framework includes but is not limited to that all applications or some applications on the device can use the first data.

A priority of the personalized permission of the first data is higher than a priority of the permission rule of the sharing path of the first data, and the priority of the permission rule of the sharing path of the first data is higher than a priority of the permission rule of the unified data management framework.

Specifically, when the unified management protocol for the first data specifies that the personalized permission of the first data is not the public permission, the use permission of the first data is the personalized permission of the first data defined in the unified management protocol for the first data.

After the unified management protocol for the first data specifies that the personalized permission of the first data is the public permission, the permission rule of the sharing path of the first data is queried. It can be learned from the foregoing descriptions that a sharing path between the two applications on the same device includes but is not limited to a drag path, a clipboard path, a cross-application manual path, and a cross-application automatic path. The drag path, the clipboard path, and the cross-application manual path all restrict that the first data can be used only by the target application. For example, if the user shares the first data in the application A to the application B through the drag path, the drag path restricts that the first data can be used only by the application B. In this way, the clipboard path and the cross-application manual path are similar to the drag path. The cross-application automatic path restricts that all applications or some applications on the device can use the first data. In other words, permission of the cross-application automatic path is the public permission, and there is no use permission limitation.

When the sharing path of the first data is not the cross-application automatic path, permission specified in the sharing path of the first data is used, and the use permission of the first data is the permission specified in the sharing path of the first data.

When the sharing path of the first data is the cross-application automatic path, the permission rule of the unified data management framework is queried. The use permission of the first data is the permission rule of the unified data management framework. If the permission rule of the unified data management framework is the public permission, and there is no use permission limitation, the first data can be used by all applications on the electronic device 100. If the permission rule of the unified data management framework is that some applications can use the first data, the first data can be used by some applications on the electronic device 100.

It should be noted that the personalized permission of the first data, the permission rule of the sharing path of the first data, and the permission rule of the unified data management framework may be preset, or may be customized by the user. The personalized permission of the first data, the permission rule of the sharing path of the first data, and the permission rule of the unified data management framework are merely used to explain this application. This is not limited in this application.

Optionally, S1109 may be performed before S1109, after S1109, or simultaneously with S1109. This is not limited in this application.

S1110: The application B on the electronic device 100 sends a read notification to the unified data management framework.

When an application (for example, the application B) on the electronic device 100 needs to read, from the unified data management framework, the data shared by the application A on the electronic device 100, the application B may send a read notification to the unified data management framework.

In some embodiments, the read notification may carry an identifier of the application B. In another embodiment, the identifier of the application B and the read notification may alternatively be sent to the unified data management framework separately.

S1111: The unified data management framework determines, based on the use permission of the first data, whether the application B has permission to use the first data.

It can be learned from S1109 that the unified data management framework has determined the use permission of the first data based on the personalized permission of the first data, the permission rule of the sharing path of the first data, and the permission rule of the unified data management framework.

The use permission of the first data may be that one or more applications on the electronic device 100 can use the first data.

The unified data management framework may first determine, based on the use description of the first data, whether the application B is capable of using the first data. When the unified data management framework is capable of using the first data, the unified data management framework may further determine whether the one or more applications that can use the first data include the identifier of the application B.

If the one or more applications that can use the first data do not include the identifier of the application B, it indicates that the application B has permission to use the first data, and S1112 is performed.

If the one or more applications that can use the first data include the identifier of the application B, it indicates that the application B has permission to use the first data, and S1113 is performed.

S1112: The procedure ends.

If the one or more applications that can use the first data do not include the identifier of the application B, it indicates that the application B has permission to use the first data, and the procedure ends.

Optionally, the unified data management framework may also send a notification to the application B, and the application B may prompt that the first data cannot be used.

S1113: The unified data management framework obtains the sharing path of the first data from the unified management protocol for the first data.

Optionally, the unified management protocol for the first data includes an "intension" field, and the "intension" field is used to fill a name of the sharing path. Therefore, the unified data management framework may obtain the sharing path of the first data from the unified management protocol for the first data.

Specifically, when the name of the sharing path filled in the "intension" field is automatic 1, the sharing path of the first data may be a cross-application automatic path.

When the name of the sharing path filled in the "intension" field is clipboard, the sharing path of the first data may be a clipboard path.

When the name of the sharing path filled in the "intension" field is drag, the sharing path of the first data may be a drag path.

When the name of the sharing path filled in the "intension" field is manual1, the sharing path of the first data may be a cross-application manual path.

For example, the sharing path of the first data obtained by the unified data management framework from the unified management protocol for the first data may be the drag path.

S1114: The unified data management framework sends the redefined first data to the drag path.

S1115: The drag path sends the redefined first data to the application B.

S1116: The application B obtains the specified data definition standard from the unified data management framework.

Optionally, S1116 is not limited to being performed after S1115, and S1116 may alternatively be performed in any step before S1117.

S1117: The application B parses the redefined first data based on the specified data definition standard, to obtain the first data.

S1118: The application B uses the first data.

Optionally, the unified data management framework may also manage the stored redefined first data. For example, after the unified data management framework sends the redefined first data to the application B or the application B uses the first data, the unified data management framework may determine to delete the redefined first data in time. In this way, the unified data management framework may delete the used redefined first data in time. Data leakage can be avoided, and in addition, memory occupied by the used redefined first data can be released in time.

After the unified data management framework determines the sharing path (for example, the drag path), the unified data management framework may send the redefined first data to the application B through the drag path.

The application B may obtain the specified data definition standard from the unified data management framework, and parse the redefined first data based on the specified data definition standard, to obtain the first data.

Then, the application B can use the first data.

That the application B can use the first data specifically includes: When the first data is non-file data, the application B on the electronic device 100 may directly obtain text content of the first data from the first data, and use the text content of the first data.

When the first data is file data, when the application B on the electronic device 100 needs to use the first data, the application B on the electronic device 100 may obtain the URI of the first data from the first data, obtain file data of the first data based on the URI of the first data, and use the file data of the first data.

Based on the method for sharing data between two applications on a same device provided in the embodiment in FIG. 11A to FIG. 11C, different applications need to define shared data based on this standard before data sharing is performed. After the shared data is received, the different applications also need to perform parsing based on this standard to obtain the shared data. In other words, for different applications and different sharing paths, data definition standards are unified. This implements format unification of the shared data.

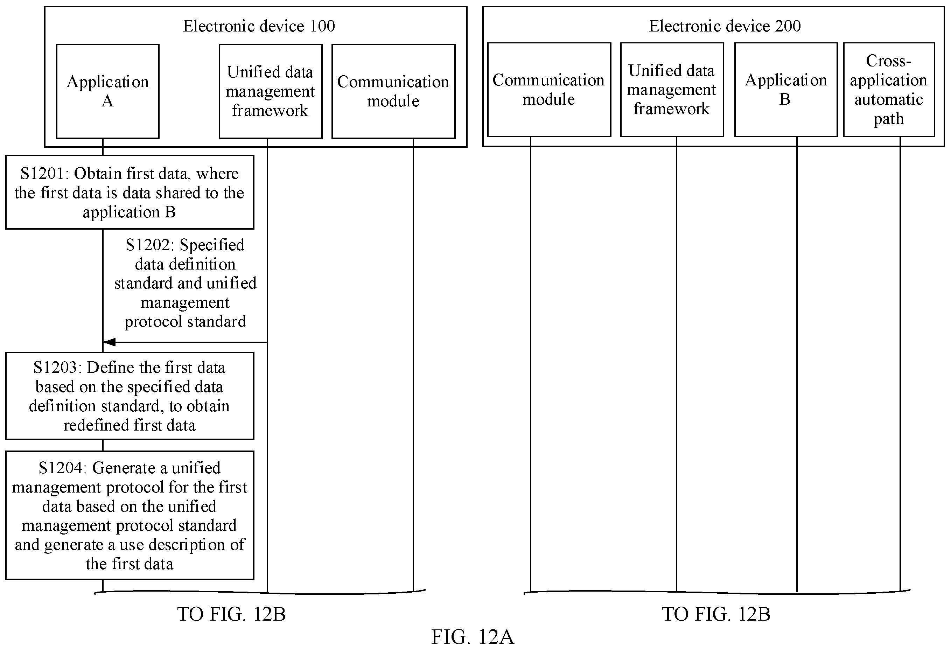

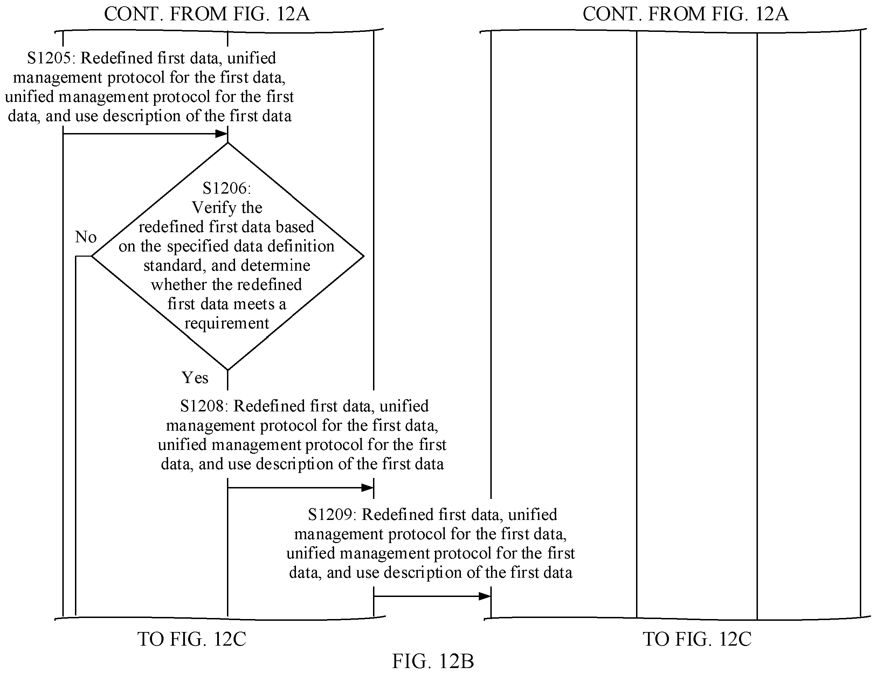

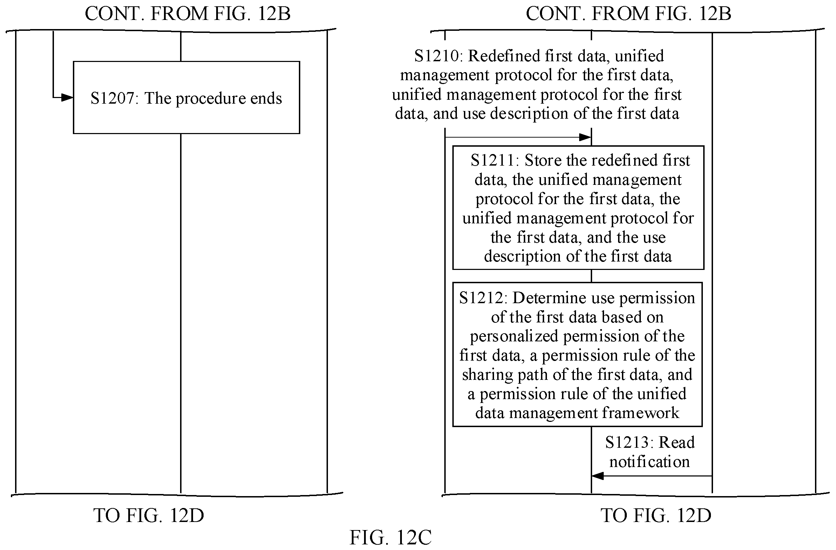

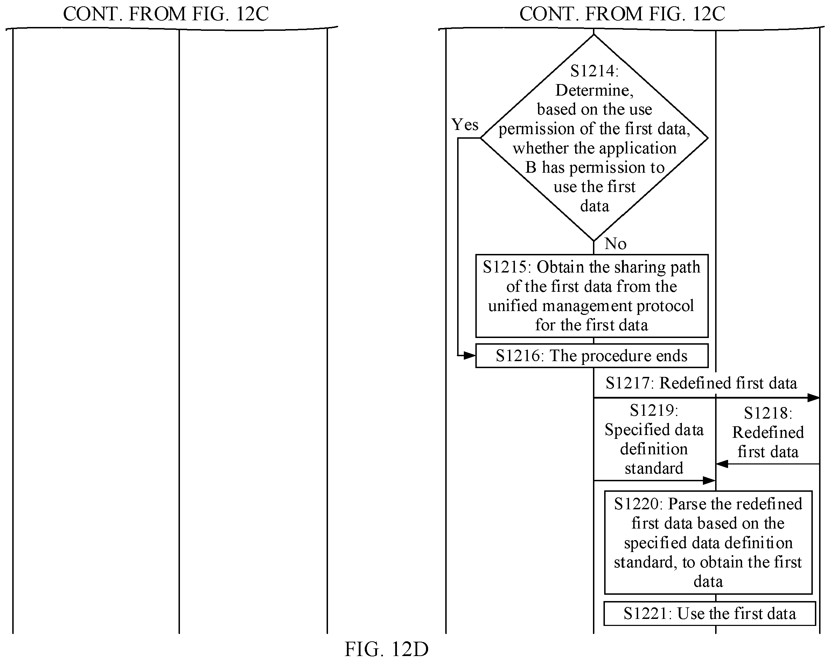

FIG. 12A to FIG. 12D are a diagram of a method of how an application A on an electronic device 100 shares data to an application B on an electronic device 200 according to an embodiment of this application.

S1201: The application A on the electronic device 100 obtains first data, where the first data is data shared to the application B on the electronic device 200.

In some embodiments, the application A may receive an operation of a user, and share the first data in the application A to the application B. For example, the first data in the application A may be shared to the application B through the drag path between the different devices, the clipboard path between the different devices, and the cross-device path between the different devices shown in FIG. 2A to FIG. 2G.

In another embodiment, the application A may alternatively automatically share the first data in the application A to the application B. For example, the first data in the application A may be shared to the application B through a cross-device automatic path.

Alternatively, the first data in the application A on the electronic device 100 may be shared to the application B on the electronic device 200 through another sharing path. This is not limited in this application.

S1202 to S1207: After the application A on the electronic device 100 obtains the first data, the application A on the electronic device 100 may generate redefined first data based on a specified data definition standard, or may generate a unified management protocol for the first data based on a unified management protocol standard and generate a use description of the first data based on the specified data definition standard. Then, the application A on the electronic device 100 sends the redefined first data, the unified management protocol for the first data, and the use description of the first data to a unified data management framework on the electronic device 100. The unified data management framework on the electronic device 100 verifies whether the redefined first data meets a requirement.

For descriptions of S1202 to S1207 in the embodiment in FIG. 12A to FIG. 12D, refer to the descriptions of S1102 to S1107 in the embodiment in FIG. 11A to FIG. 11C. Details are not described herein again in this application.

S1208: The unified data management framework on the electronic device 100 sends the redefined first data, the unified management protocol for the first data, and the use description of the first data to a communication module on the electronic device 100.

S1209: The communication module on the electronic device 100 sends the redefined first data, the unified management protocol for the first data, and the use description of the first data to a communication module on the electronic device 200.

S1210: The communication module on the electronic device 200 sends the redefined first data, the unified management protocol for the first data, and the use description of the first data to a unified data management framework on the electronic device 200.

After the unified data management framework on the electronic device 100 verifies whether the redefined first data meets the requirement and the verification succeeds, the unified data management framework on the electronic device 100 may send the redefined first data, the unified management protocol for the first data, and the use description of the first data to the communication module on the electronic device 200 through the communication module on the electronic device 100.

Then, the communication module on the electronic device 200 sends the redefined first data, the unified management protocol for the first data, and the use description of the first data to the unified data management framework on the electronic device 200. In this way, the unified data management framework on the electronic device 200 may store the redefined first data, the unified management protocol for the first data, and the use description of the first data, so that an application on the electronic device 200 may obtain and use the first data from the unified data management framework on the electronic device 200.

Optionally, S1206 and S1207 may also be performed by the unified data management framework on the electronic device 200. This is not limited in this application either.

S1211 to S1220: After the unified data management framework on the electronic device 200 obtains the redefined first data that meets the requirement, the unified management protocol for the first data, and the use description of the first data, one or more applications on the electronic device 200 may obtain, from the unified data management framework on the electronic device 200, the first data shared by the application A on the electronic device 100. The unified data management framework on the electronic device 200 may verify whether the one or more applications on the electronic device 200 have a capability and permission to access the first data shared by the application A on the electronic device 100. When the one or more applications on the electronic device 200 have the capability and the permission, the unified data management framework on the electronic device 200 may send the redefined first data to the one or more applications on the electronic device 200.

For descriptions of S1211 and S1220 in the embodiment in FIG. 12A to FIG. 12D, refer to the descriptions of S1108 to S1117 in the embodiment in FIG. 11A to FIG. 11C. Details are not described herein again in this application.

S1221: The application B on the electronic device 200 uses the first data.

When the first data is text data, the application B on the electronic device 200 may directly obtain text content of the first data from the first data, and use the text content of the first data.

When the first data is file data, when the application B on the electronic device 200 needs to use the first data, the application B on the electronic device 200 may obtain the URI of the first data from the first data, and obtain the file data of the first data based on the URI of the first data. Specifically, the application B on the electronic device 200 may send the URI of the first data to the communication module on the electronic device 100 through the communication module. After the communication module on the electronic device 100 receives an obtaining notification, the communication module on the electronic device 100 may obtain the file data of the first data based on the URI of the first data, and then the communication module on the electronic device 100 sends the file data of the first data to the communication module on the electronic device 200. Then, the communication module on the electronic device 200 sends the file data of the first data to the application B on the electronic device 200, and the application B on the electronic device 200 can use the file data of the first data.

Based on the method for sharing data between two applications on different devices provided in the embodiment in FIG. 12A to FIG. 12D, different applications need to define shared data based on this standard before data sharing is performed. After the shared data is received, the different applications also need to perform parsing based on this standard to obtain the shared data. In other words, for different applications and different sharing paths, data definition standards are unified. This implements format unification of the shared data.

This application provides an electronic device. The electronic device includes one or more processors, one or more memories, and one or more cameras. The one or more cameras and the one or more memories are coupled to the one or more processors. The one or more memories are configured to store computer program code, and the computer program code includes computer instructions. The one or more processors invoke the computer instructions, so that the electronic device performs the data sharing method according to the embodiment in FIG. 11A to FIG. 11C.

This application provides a computer-readable storage medium, configured to store computer instructions. When the computer instructions are run on an electronic device, the electronic device is enabled to perform the data sharing method according to the embodiment in FIG. 11A to FIG. 11C.

This application provides a computer program product. When the computer program product is run on an electronic device, the electronic device is enabled to perform the data sharing method according to the embodiment in FIG. 11A to FIG. 11C.

This application provides an electronic device. The electronic device includes one or more processors, one or more memories, and one or more cameras. The one or more cameras and the one or more memories are coupled to the one or more processors. The one or more memories are configured to store computer program code, and the computer program code includes computer instructions. The one or more processors invoke the computer instructions, so that the electronic device performs the data sharing method according to the embodiment in FIG. 12A to FIG. 12D.

This application provides a computer-readable storage medium, configured to store computer instructions. When the computer instructions are run on an electronic device, the electronic device is enabled to perform the data sharing method according to the embodiment in FIG. 12A to FIG. 12D.

This application provides a computer program product. When the computer program product is run on an electronic device, the electronic device is enabled to perform the data sharing method according to the embodiment in FIG. 12A to FIG. 12D.

Implementations of this application may be randomly combined to achieve different technical effect.

All or some of the foregoing embodiments may be implemented by software, hardware, firmware, or any combination thereof. When the software is used to implement the foregoing embodiments, all or some of the foregoing embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely example embodiments of the technical solutions of the present invention, and are not intended to limit the protection scope of the present invention. Any modification, equivalent replacement, or improvement made according to the disclosure of the present invention shall fall within the protection scope of the present invention.

## Claims

1. A data sharing system, wherein the system comprises a first electronic device and a second electronic device, the first electronic device establishes a communication connection to the second electronic device, the first electronic device comprises a first application, and the second electronic device comprises a second application, wherein
the first application is configured to obtain first data;
the first application is further configured to:
generate, based on a specified data definition standard, first definition data corresponding to the first data, wherein the first definition data comprises an attribute of the first data and the first data, or the first definition data comprises an attribute of the first data and a storage path of the first data; and
send the first definition data to the second application through a first sharing path and the communication connection;
the second application is configured to obtain the first definition data through the first sharing path;
the second application is further configured to parse out the first data or the storage path of the first data from the first definition data based on the specified data definition standard;
the first application is further configured to:
obtain second data;
generate, based on the specified data definition standard, second definition data corresponding to the second data, wherein the second definition data comprises an attribute of the second data and the second data, or the second definition data comprises an attribute of the second data and a storage path of the second data; and
send the second definition data to the second application through the second sharing path and the communication connection; and
the second application is further configured to:
obtain the second definition data through the second sharing path; and
parse out the second data or the storage path of the second data from the second definition data based on the specified data definition standard, wherein
the second sharing path is different from the first sharing path.

2. The system according to claim 1, wherein the first electronic device further comprises a first data management framework, and the second electronic device further comprises a second data management framework;
the first application is specifically configured to send the first definition data to the first data management framework through the first sharing path;
the first data management framework is configured to send the first definition data to the second data management framework through the communication connection; and
the second data management framework is further configured to send the first definition data to the second application through the first sharing path.

3. The system according to claim 1 or 2, wherein the first application is further configured to: generate a unified management protocol for the first data based on a unified management protocol standard, wherein the unified management protocol for the first data comprises an identifier of the first sharing path; and
send the unified management protocol for the first data to the first data management framework, wherein
the first data management framework is further configured to send the unified management protocol for the first data to the second data management framework through the communication connection; and
the second data management framework is specifically configured to:
obtain the identifier of the first sharing path from the unified management protocol for the first data; and
send the first definition data to the second application based on the identifier of the first sharing path through the first sharing path.

4. The system according to claim 2 or 3, wherein the first application is further configured to: generate a use description of the first data based on the specified data definition standard, wherein the use description of the first data comprises personalized permission of the first data; and
send the use description of the first data to the first data management framework, wherein
the first data management framework is further configured to send the use description of the first data to the second data management framework through the communication connection; and
the second data management framework is specifically configured to:
obtain a first notification sent by the second application, wherein the first notification is used to read the first data, and the first notification comprises an identifier of the second application;
obtain a permission rule of the first sharing path based on the identifier of the first sharing path in the unified management protocol for the first data;
obtain the personalized permission of the first data from the use description of the first data; and
after it is determined, based on the use description of the first data, that the second application is capable of accessing the first data, and when the first data management framework determines, based on the personalized permission of the first data, the permission rule of the first sharing path, a permission rule of the first data management framework, and the identifier of the second application, that the second application has permission to access the first data, send the first definition data to the second application based on the identifier of the first sharing path through the first sharing path.

5. The system according to claim 4, wherein the second data management framework is further configured to:
verify the first definition data based on the specified data definition standard; and
when the verification succeeds, store the first definition data, the unified management protocol for the first data, and the use description of the first data.

6. A data sharing method, wherein the method comprises:
obtaining, by a second application on a second electronic device through a first sharing path and a communication connection, first definition data sent by a first application on a first electronic device, wherein the first definition data is generated by the first application based on a specified data definition standard and first data; the first definition data comprises an attribute of the first data and the first data, or the first definition data comprises an attribute of the first data and a storage path of the first data; the second electronic device is different from the first electronic device; and the first electronic device establishes the communication connection to the second electronic device;
parsing out, by the second application, the first data or the storage path of the first data from the first definition data based on the specified data definition standard;
obtaining, by the second application through a second sharing path and the communication connection, second definition data sent by the first application, wherein the second definition data is generated by the first application based on the specified data definition standard and second data; and the second definition data comprises an attribute of the second data and the second data, or the second definition data comprises an attribute of the second data and a storage path of the second data; and
parsing out, by the second application, the second data or the storage path of the second data from the second definition data based on the specified data definition standard, wherein
the second sharing path is different from the first sharing path.

7. The method according to claim 6, wherein the first electronic device further comprises a first data management framework, and the second electronic device further comprises a second data management framework; and
the obtaining, by the second application through the first sharing path and the communication connection, the first definition data sent by the first application specifically comprises:
receiving, by the second data management framework through the communication connection, the first definition data sent by the first data management framework, wherein the first definition data stored in the first data management framework is sent by the first application; and
sending, by the second data management framework, the first definition data to the second application through the first sharing path.

8. The method according to claim 6 or 7, wherein the obtaining, by the second application through the first sharing path, the first definition data sent by the first application specifically comprises:
receiving, by the second data management framework through the communication connection, a unified management protocol for the first data that is sent by the first data management framework, wherein the unified management protocol for the first data is generated by the first application based on a unified management protocol standard, and the unified management protocol for the first data comprises an identifier of the first sharing path;
obtaining, by the second data management framework, the identifier of the first sharing path from the unified management protocol for the first data; and
sending, by the second data management framework, the first definition data to the second application based on the identifier of the first sharing path through the first sharing path.

9. The method according to claim 8, wherein the obtaining, by the second application through the second sharing path, the second definition data sent by the first application specifically comprises:
receiving, by the second data management framework through the communication connection, a unified management protocol for the second data that is sent by the first data management framework, wherein the unified management protocol for the second data is generated by the first application based on the unified management protocol standard, and the unified management protocol for the second data comprises an identifier of the second sharing path;
obtaining, by the second data management framework, the identifier of the second sharing path from the unified management protocol for the second data; and
sending, by the second data management framework, the second definition data to the second application based on the identifier of the second sharing path through the second sharing path, wherein
the unified management protocol for the second data is different from the unified management protocol for the first data.

10. The method according to claim 8 or 9, wherein before the sending, by the second data management framework, the first definition data to the second application based on the identifier of the first sharing path through the first sharing path, the method further comprises:
receiving, by the second data management framework through the communication connection, a use description of the first data that is sent by the first data management framework, wherein the use description of the first data is generated by the first application based on the specified data definition standard and sent to the first data management framework, and the use description of the first data comprises personalized permission of the first data; and
the sending, by the second data management framework, the first definition data to the second application based on the identifier of the first sharing path through the first sharing path specifically comprises:
obtaining, by the second data management framework, a first notification sent by the second application, wherein the first notification is used to read the first data, and the first notification comprises an identifier of the second application;
obtaining, by the second data management framework, a permission rule of the first sharing path based on the identifier of the first sharing path in the unified management protocol for the first data;
obtaining, by the second data management framework, the personalized permission of the first data from the use description of the first data; and
after the second data management framework determines, based on the use description of the first data, that the second application is capable of accessing the first data, and when the first data management framework determines, based on the personalized permission of the first data, the permission rule of the first sharing path, a permission rule of the first data management framework, and the identifier of the second application, that the second application has permission to access the first data, sending, by the second data management framework, the first definition data to the second application based on the identifier of the first sharing path through the first sharing path.

11. The method according to claim 10, wherein after the second data management framework receives the first definition data and the unified management protocol for the first data, the method further comprises:
verifying, by the second data management framework, the first definition data based on the specified data definition standard; and
when the verification succeeds, storing, by the second data management framework, the first definition data, the unified management protocol for the first data, and the use description of the first data.

12. The method according to any one of claims 6 to 11, wherein the specified data definition standard is stored in the second data management framework, and the method further comprises:
sending, by the second data management framework, the specified data definition standard to the second application.

13. The method according to any one of claims 6 to 12, wherein after the second application parses out the storage path of the first data from the first definition data based on the specified data definition standard, the method further comprises:
sending, by the second application, the storage path of the first data to the first application through the communication connection; and
receiving, by the second application through the communication connection, the first data sent by the first application, wherein the first data is obtained by the first application based on the storage path of the first data.

14. The method according to any one of claims 6 to 13, wherein the attribute of the first data comprises one or more of the following: a type of the first data, a size of the first data, and creation time of the first data.

15. A data sharing method, applied to a first electronic device, wherein the first electronic device comprises a first application and a second application, and the method comprises:
obtaining, by the first application, first data;
generating, by the first application based on a specified data definition standard, first definition data corresponding to the first data, wherein the first definition data comprises an attribute of the first data and the first data, or the first definition data comprises an attribute of the first data and a storage path of the first data;
sending, by the first application, the first definition data to the second application through a first sharing path;
parsing out, by the second application, the first data or the storage path of the first data from the first definition data based on the specified data definition standard;
obtaining, by the first application, second data;
generating, by the first application based on the specified data definition standard, second definition data corresponding to the second data, wherein the second definition data comprises an attribute of the second data and the second data, or the second definition data comprises an attribute of the second data and a storage path of the second data;
sending, by the first application, the second definition data to the second application through a second sharing path; and
parsing out, by the second application, the second data or the storage path of the second data from the second definition data based on the specified data definition standard, wherein
the second sharing path is different from the first sharing path.

16. The method according to claim 15, wherein the method further comprises:
obtaining, by the first application, the first definition data;
sending, by the first application, the first definition data to the second application through the second sharing path; and
parsing out, by the second application, the first data or the storage path of the first data from the first definition data based on the specified data definition standard.

17. The method according to claim 15 or 16, wherein the first electronic device further comprises a first data management framework, and the sending, by the first application, the first definition data to the second application through the first sharing path specifically comprises:
generating, by the first application, a unified management protocol for the first data based on a unified management protocol standard, wherein the unified management protocol for the first data comprises an identifier of the first sharing path;
sending, by the first application, the first definition data and the unified management protocol for the first data to the first data management framework;
obtaining, by the first data management framework, the identifier of the first sharing path from the unified management protocol for the first data; and
sending, by the first data management framework based on the identifier of the first sharing path, the first definition data to the second application through the first sharing path.

18. The method according to claim 17, wherein the sending, by the first application, the second definition data to the second application through the second sharing path specifically comprises:
generating, by the first application, a unified management protocol for the second data based on the unified management protocol standard, wherein the unified management protocol for the second data comprises an identifier of the second sharing path;
sending, by the first application, the second definition data and the unified management protocol for the second data to the first data management framework;
obtaining, by the first data management framework, the identifier of the second sharing path from the unified management protocol for the second data; and
sending, by the first data management framework, the second definition data to the second application based on the identifier of the second sharing path through the second sharing path, wherein
the unified management protocol for the second data is different from the unified management protocol for the first data.

19. The method according to claim 17 or 18, wherein the method further comprises:
generating, by the first application, a use description of the first data based on the specified data definition standard, wherein the use description of the first data comprises personalized permission of the first data; and
the sending, by the first data management framework based on the identifier of the first sharing path, the first definition data to the second application through the first sharing path specifically comprises:
obtaining, by the first data management framework, a first notification sent by the second application, wherein the first notification is used to read the first data, and the first notification comprises an identifier of the second application;
obtaining, by the first data management framework, a permission rule of the first sharing path based on the identifier of the first sharing path in the unified management protocol for the first data;
obtaining, by the first data management framework, the personalized permission of the first data from the use description of the first data; and
after the first data management framework determines, based on the use description of the first data, that the second application is capable of accessing the first data, and when the first data management framework determines, based on the personalized permission of the first data, the permission rule of the first sharing path, a permission rule of the first data management framework, and the identifier of the second application, that the second application has permission to access the first data, sending, by the first data management framework, the first definition data to the second application based on the identifier of the first sharing path through the first sharing path.

20. The method according to claim 19, wherein after the sending, by the first application, the first definition data and the unified management protocol for the first data to the first data management framework, the method further comprises:
verifying, by the first data management framework, the first definition data based on the specified data definition standard; and
when the verification succeeds, storing, by the first data management framework, the first definition data, the unified management protocol for the first data, and the use description of the first data.

21. The method according to claim 20, wherein the method further comprises: when the verification fails, deleting the first definition data, the unified management protocol for the first data, and the use description of the first data.

22. The method according to any one of claims 17 to 21, wherein the specified data definition standard and the unified management protocol standard are stored in the first data management framework, and the method further comprises:
sending, by the first data management framework, the specified data definition standard and the unified management protocol standard to the first application; and
sending, by the first data management framework, the specified data definition standard to the second application.

23. The method according to any one of claims 15 to 22, wherein after the parsing out, by the second application, the first data or the storage path of the first data from the first definition data, the method further comprises:
deleting, by the first data management framework, the first definition data.

24. The method according to any one of claims 15 to 23, wherein the first sharing path or the second sharing path comprises any one of the following: a drag path, a clipboard path, a cross-application manual path, and a cross-application automatic path.

25. The method according to any one of claims 15 to 24, wherein the attribute of the first data comprises one or more of the following: a type of the first data, a size of the first data, and creation time of the first data.

26. An electronic device, wherein the electronic device comprises one or more processors, one or more memories, and one or more cameras; the one or more cameras and the one or more memories are coupled to the one or more processors; the one or more memories are configured to store computer program code, and the computer program code comprises computer instructions; and the one or more processors invoke the computer instructions, so that the electronic device performs the method according to any one of claims 15 to 25.

27. A computer-readable storage medium, configured to store computer instructions, wherein when the computer instructions are run on an electronic device, the electronic device is enabled to perform the method according to any one of claims 15 to 25.

28. A computer program product, wherein when the computer program product is run on an electronic device, the electronic device is enabled to perform the method according to any one of claims 15 to 25.
